# EUROPEAN PATENT APPLICATION

(11) **EP 4 721 970 A1**
(43) Date of publication of application: **08.04.2026**
(21) Application number: 24203903.0
(22) Date of filing: 01.10.2024
(51) Int. Cl.: B32B 7/12, B32B 15/04, B32B 15/18, C09J 5/04, C09J 9/02, C09J 163/00

(54) **BONDED STRUCTURE COMPRISING AN ELECTROCHEMICALLY DEBONDABLE ADHESIVE LAYER**

(71) Applicant: Henkel AG & Co. KGaA, 40589 Düsseldorf (DE)
(72) Inventor: Franken, Uwe, 41542 Dormagen (DE); Schriefers, Mathias, 41199 Mönchengladbach (DE); Friedrich, Norman, 40225 Duesseldorf (DE)

(57) **Abstract**

A bonded structure comprising: a first substrate; a second substrate; and, a substructure. The substructure comprises: a first planar plate having an outer surface and being provided with an electrically conductive inner surface; a second planar plate having an outer surface and being provided with an electrically conductive inner surface; and, a layer of electrochemically debondable adhesive interposed between said electrically conductive inner surfaces of the first and second planar plates, said adhesive having electrolyte functionality and comprising a non-polymerizable electrolyte and a cured resinous matrix (M^{R}). The bonded structure further comprises: a layer of a first fixative interposed between the outer surface of the first planar plate of the substructure and the first substrate; and, a layer of a second fixative interposed between the outer surface of the second planar plate of the substructure and the second substrate.

## Description

### FIELD OF THE INVENTION

The present invention is directed to a bonded structure which comprises first and second substrates which are independently affixed to a substructure using respectively first and second fixatives. That substructure comprises: a first planar plate having an external surface on which is disposed the first fixative and which is provided with an electrically conductive inner surface; a second planar plate having an external surface on which is disposed the second fixative and which is provided with an electrically conductive inner surface; and, a layer of electrochemically debondable adhesive interposed between said electrically conductive inner surfaces of the planar plates.

### BACKGROUND TO THE INVENTION

Adhesive bonds and polymeric coatings are commonly used in the assembly and finishing of manufactured goods. They are used in place of mechanical fasteners, such as screws, bolts and rivets, to provide bonds with reduced machining costs and greater adaptability in the manufacturing process. Adhesive bonds distribute stresses evenly, reduce the possibility of fatigue and seal the joints from corrosive species.

Whilst adhesive bonds thus offer many advantages over mechanical fasteners, it tends to be difficult to disassemble adhesively bonded objects where this is required in practical applications. The removal of the adhesive through mechanical processes - such as by sand blasting or by wire brushing - is often precluded, in part because the adhesive is disposed between substrates and is thus either inaccessible or difficult to abrade without corrupting the substrate surfaces. Disassembly through the application of chemicals and / or high temperature - such as disclosed in US Patent No. 4,171,240 (Wong) and US Patent No. 4,729,797 (Linde et al.) - might be effective but can be time consuming and complex to perform: moreover, the aggressive chemicals and / or harsh conditions required can damage the substrates being separated, rendering them unsuitable for subsequent applications.

Noting these problems, certain authors have sought to develop electrochemically debondable adhesive compositions, wherein the passage of an electrical current through the cured compositions acts to disrupt the bonding at the interface of the adhesive and the substrate.

US Patent No. 7,465,492 (Gilbert) describes an electrochemically disbondable composition comprising: a matrix functionality comprising a monomer selected from the group consisting of acrylics, methacrylics and combinations thereof; a free radical initiator; and, an electrolyte, wherein the electrolyte provides sufficient ionic conductivity to said composition to support a faradaic reaction at a bond formed between the composition and an electrically conductive surface and thus allows the composition to disbond from the surface.

US 2007/0269659 (Gilbert) describes an adhesive composition disbondable at two interfaces, the composition: (i) comprising a polymer and an electrolyte; (ii) facilitating joinder of two surfaces; and, (iii) in response to a voltage applied across both surfaces so as to form an anodic interface and a cathodic interface, disbonding from both the anodic and cathodic surfaces.

US2020/195025A (Yoder et al.) describes a system comprising: an electronic device; a battery coupled to the electronic device; and, an electro-adhesive layer included within a coupling between the battery and the electronic device. The electro-adhesive layer is composed of a material that chemically reacts to weaken a bond at an interface between the battery and the electronic device when a current of predetermined magnitude is directed through the electro-adhesive layer between a first electrode and a second electrode, the weakened bond facilitating separation of the battery from the electronic device.

EP 3 835 383 A1 (Henkel AG & Co. KGaA) discloses a bonded structure comprising a first material layer having an electrically conductive surface; and, a second material layer having an electrically conductive surface; wherein a curable and debondable one component (1K) adhesive composition is disposed between the first and second material layers. The curable and one component (1K) debondable adhesive composition comprises: a) epoxy resin; b) a curing agent for said epoxy resin; c) an electrolyte; and, d) an electrically non-conductive filler; wherein said composition comprises at least one of: e) a combination of a solubilizer and a toughener; and, f) electrically conductive particles.

EP 3 835 378 A1 (Henkel AG & Co. KGaA) discloses a bonded structure comprising a first material layer having an electrically conductive surface; a second material layer having an electrically conductive surface; wherein a cured debondable two-part hybrid adhesive composition is disposed between the first and second material layers. The curable and debondable two-part hybrid adhesive composition comprises a first part comprising: a) epoxy resin; b) (meth)acrylate monomer; c) an electrolyte; d) a solubilizer; and, e) a filler. The composition further comprises a second part comprising: a) a curing agent consisting of at least one compound possessing at least two epoxide reactive groups per molecule; b) an accelerator; and, c) a filler.

EP 3 835 386 A1 (Henkel AG & Co. KGaA) discloses a bonded structure comprising a first material layer having an electrically conductive surface; a second material layer having an electrically conductive surface; wherein a cured debondable two-part (2K) adhesive composition is disposed between the first and second material layers. The curable and debondable two-part (2K) adhesive composition comprise a first part comprising: a) epoxy resin; b) an electrolyte; and, c) optionally, a solubilizer. The second part comprises: a) a curing agent consisting of at least one compound possessing at least two epoxide reactive groups per molecule; and, b) an accelerator. The composition still further comprises an electrically non-conductive filler and, optionally a toughener.

There is considered to remain a need in the art to provide an adhesive system which can be conveniently used within composite structures which contain at least one substrate bonded with conventional structural fixatives: such an adhesive system should not compromise the structural integrity of the bonded structure but should provide for the effective separation of the bonded structure by the facile application of an electrical potential across the adhesive.

### STATEMENT OF THE INVENTION

In accordance with a first aspect of the present disclosure, there is provided a bonded structure comprising:
a first substrate;
a second substrate; and,
a substructure, said substructure comprising:
   a first planar plate having an outer surface and being provided with an electrically conductive inner surface;
   a second planar plate having an outer surface and being provided with an electrically conductive inner surface;
   a layer of electrochemically debondable adhesive interposed between said electrically conductive inner surfaces of the first and second planar plates, said adhesive having electrolyte functionality and comprising a non-polymerizable electrolyte and a cured resinous matrix (M^{R});
wherein the bonded structure further comprises:
a layer of a first fixative interposed between the outer surface of the first planar plate of the substructure and the first substrate; and,
a layer of a second fixative interposed between the outer surface of the second planar plate of the substructure and the second substrate.

In the bonded structure, it is preferred that:
said first and second planar plates of the bonded structure each independently have a thickness of from 0.5 to 2.5 mm, preferably from 1.0 to 2.5 mm, more preferably from 1.5 to 2.5 mm; and / or,
said layer of electrochemically debondable adhesive has a thickness of from 10 to 1000 µm, preferably from 10 to 500 µm, more preferably from 30 to 300 µm.

In one embodiment of the bonded structure, at least one of said first and said second planar plates consists of a material which possesses bulk electrical conductivity. The material which possesses bulk electrical conductivity is desirably selected from: metallic materials; semiconductor materials; or, resinous materials which are rendered conductive by virtue of electrically conductive elements disposed therein.

In another embodiment of the bonded structure, which is not mutually exclusive of that given above, at least one of said first and said second planar plates comprises: a bulk material which does not possess electrical conductivity; and, an electrically conductive material disposed on that bulk material to provide said electrically conductive inner surface.

It is envisaged that said first planar plate may be an integrant of a frame, which frame preferably supports at least one of said first or second substrates. Alternatively or additionally, said second planar plate may be an integrant of a frame, which frame preferably supports at least one of said first or second substrates.

In important embodiments, said electrolyte of the electrochemically debondable adhesive comprises at least one non-polymerizable salt chosen from: ammonium salts; pyridinium salts; pyrrolidinium salts; phosphonium salts; imidazolium salts; oxazolium salts; guanidinium salts; sulfonium salts; thiazolium salts; and, mixtures thereof.

Good results have been obtained where said electrolyte comprises at least one non-polymerizable salt chosen from: trihexyl(tetradecyl)phosphonium bis(trifluoromethylsulfonyl)imide; tributylmethylphosphonium bis(fluorosulfonyl) imide; tributylmethyl- phosphonium methyl sulfate; tributylmethylammonium bis(fluorosulfonyl)imide; N-propyl-N-methylpyrrolidinium bis(fluorosulfonyl) imide; 1-ethyl-3-methyl-1H-imidazol-3-um methyl sulfate; 1-ethyl-3-methyl-1H-imidazol-3-um methanesulfonate; 1-ethyl-3-methylimidazolium trifluoromethanesulfonate; 1-ethyl-3-methylimidazolium bis(trifluoromethylsulfonyl)imide; 1-butyl-3-methylimidazolium methyl sulfate; 1-butyl-3-methylimidazolium methanesulfonate; 1-butyl-3-methyl-imidazolium-fluorosulfonate; 1-butyl-3-methylimidazolium trifluoromethanesulfonate; 1-butyl-3-methylimidazolium bis(trifluoromethylsulfonyl)imide; 1-butyl-3-methylimidazolium bis(fluorosulfonyl)imide; 1-dodecyl-3-methylimidazolium bis(fluorosulfonyl)imide; and; mixtures thereof.

The layer of electrochemically debondable adhesive is typically obtained from a curable composition which comprises: said non-polymerizable electrolyte; a curable resin (C^{R}); and, optionally additive and adjunct materials. Without intention to limit the present disclosure two alternative methods are envisaged by which the substructure (S) may be obtained from the described curable compositions. A first method (I) comprises: interposing the curable composition between the conductive surfaces of the first and second planar plates; and, subsequently curing said interposed composition. A second method (II) comprises: forming an article of manufacture (A) comprising an adhesive transfer film, said film being obtained by the curing of said curable composition; separating the adhesive transfer film from the article of manufacture; applying said adhesive transfer film to the electrically conductive inner surface of the first planar plate; bringing the first planar plate into contact with the second planar plate to interpose the adhesive transfer film between the electrically conductive inner surfaces of said first and second planar plates; and, heating the interposed adhesive transfer film.

In an exemplary embodiment, said curable composition from which the layer of electrochemically debondable adhesive is obtained is a two-component (2K) composition comprising:
a first component comprising:
   a) said non-polymerizable electrolyte; and,
   b) at least one epoxide compound; and,
a second component comprising:
   c) at least one compound which provides at least one epoxide-reactive group; and,
   d) an accelerator,

   wherein the two component (2K) composition further comprises:
      e) a rheology control agent comprising electrically non-conductive fillers, electrically conductive fillers or mixtures thereof,
   further wherein the composition is characterized by a molar ratio of epoxide-reactive groups to epoxide groups from 0.6:1 to 1.2: 1.

According to this embodiment, it is preferred that the two-component (2K) composition comprises, based on the weight of the composition:
from 0.5 to 15 wt.%, preferably 0.5 to 10 wt.% of a) said non-polymerizable electrolyte;
from 20 to 70 wt.%, preferably 20 to 60 wt.% of b) said at least one epoxide compound;
from 0.1 to 25 wt.%, preferably from 1 to 25 wt.%, of c) said at least one compound which provides at least one epoxide-reactive group;
from 0 to 15 wt.%, preferably from 0.1 to 10 wt.% of d) said accelerator; and,
from 10 to 60 wt.%, preferably from 15 to 60 wt.% of e) said rheology control agent,
wherein the two-component (2K) composition is characterized by a molar ratio of epoxide-reactive groups to epoxide groups from 0.6:1 to 1.2: 1, preferably from 0.9: 1 to 1.1: 1.

In accordance with a second aspect of the disclosure, there is provided a method of separating the bonded structure as defined herein above and in the appended claims, the method comprising the steps of: i) applying a voltage across the electrically conductive surfaces of the substructure to form an anodic interface and a cathodic interface; and, ii) debonding said surfaces. In exemplary embodiments of this method, the voltage applied in step i) is: from 0.5 to 200 V; and, applied for a duration of from 1 second to 60 minutes.

The present disclosure further envisages the use of the bonded structure as defined herein above and in the appended claims in the housing or framing of electronic components. Such electronic components might, for instance, be disposed in: e-mobility apparatuses; other transportation apparatuses; and, domestic apparatuses such as kitchen appliances, washing machines, vacuum cleaners and electrical appliances.

Where the aspects of the disclosure are described above as having certain embodiments, any one or more of those embodiments can be implemented in or combined with any one of the further embodiments, even if that combination is not explicitly described. Expressed differently, the described embodiments are not mutually exclusive, and permutations thereof remain within the scope of this disclosure.

### DEFINITIONS

The terms "*comprising*", "*comprises*" and "*comprised* of" as used herein are synonymous with "*including*", "*includes*", "*containing*" or "*contains*", and are inclusive or open-ended and do not exclude additional, non-recited members, elements or method steps.

As used herein, the term "*consisting of*" excludes any element, ingredient, member or method step not specified. For completeness, the term "*comprising*" encompasses "*consisting of*"*.*

The words "*preferred*", "*preferably*", "*desirably*" and "*particularly*" are used frequently herein to refer to embodiments of the disclosure that may afford particular benefits, under certain circumstances. However, the recitation of one or more preferable, preferred, desirable or particular embodiments does not imply that other embodiments are not useful and is not intended to exclude those other embodiments from the scope of the disclosure.

The word "*exemplary*" is used herein to mean serving as an example, instance, or illustration. Any aspect or design described herein as "*exemplary*" is not necessarily to be construed as preferred or advantageous over other aspects or designs. Rather, use of the word exemplary is intended to present concepts in a concrete fashion.

As used throughout this application, the word "*may*" is used in a permissive sense - that is meaning to have the potential to - rather than in the mandatory sense.

Spatially relative terms, such as "*inner*", "*outer*", "*top*", "*back*", "*above*", "*below"*, "*left*", "*right*" and the like may be applicable herein to describe an component's relationship to another component(s) as illustrated in the figures. Obviously all such spatially relative terms refer to the orientation shown in the figures only for ease of illustration and are not necessarily limiting given that an assembly can assume orientations and configurations different from those illustrated in the figures when in use.

The term "*plurality*" as used herein is defined as two or more than two.

When amounts, concentrations, dimensions and other parameters are expressed in the form of a range, a preferable range, an upper limit value, a lower limit value or preferable upper and limit values, it should be understood that any ranges obtainable by combining any upper limit or preferable value with any lower limit or preferable value are also specifically disclosed, irrespective of whether the obtained ranges are clearly mentioned in the context.

Further, in accordance with standard understanding, a weight range represented as being "*from 0 to* x" specifically includes 0 wt.%: the ingredient defined by said range may be absent from the material or may be present in the material in an amount up to x wt.%.

As used herein, room temperature is 23°C plus or minus 2°C. As used herein, *"ambient conditions"* means the temperature and pressure of the surroundings in which the composition is located or in which a coating layer or the substrate of said coating layer is located.

The molecular weights referred to in this specification can be measured with gel permeation chromatography (GPC) using polystyrene calibration standards, such as is done according to ASTM 3536.

Viscosities of the coating or ink compositions described herein are, unless otherwise stipulated, measured using the Brookfield Viscometer, Model RVT at standard conditions of 20°C and 50% Relative Humidity (RH). The viscometer is calibrated using silicone oils of known viscosities, which vary from 5,000 cps to 50,000 cps. A set of RV spindles that attach to the viscometer are used for the calibration. Measurements of the coating or ink compositions are done using the No. 6 spindle at a speed of 20 revolutions per minute for 1 minute until the viscometer equilibrates. The viscosity corresponding to the equilibrium reading is then calculated using the calibration.

Where mentioned, a calculated glass transition temperature ("T_{g}") of a polymer or co-polymer is that temperature which may be calculated by using the Fox equation (T. G. Fox, Bull. Am. Physics Soc., Volume 1, Issue No. 3, page 123(1956)). The glass transition temperatures of certain homo-polymers may be found in the published literature, such as in *"*Polymer Handbook", edited by J. Brandrup and E. H. Immergut, Interscience Publishers.

The actual glass transition temperature (T_{g}) of a polymer can be determined by differential scanning calorimetry (DSC). The use of DSC to determine T_{g} is well known in the art, and is described by B. Cassel and M. P. DiVito in "Use of DSC To Obtain Accurate Thermodynamic and Kinetic Data", American Laboratory, January 1994, pp 14-19, and by B. Wunderlich in Thermal Analysis, Academic Press, Inc., 1990. The glass transition temperatures (T_{g}) specifically measured in the current patent application have been measured according to the methodology of Deutsches Institut für Normung (DIN) 11357.

The term "*softening point*" as used herein refers to the temperature at which a material, such as a polymer, loses its solid characteristics and becomes relatively fluid. A material's softening point as given herein is that temperature measured using the standard ball and ring method according to ISO 4625-1: 2004.

Unless otherwise stated, the term "*particle size*" refers to the largest axis of the particle. In the case of a generally spherical particle, the largest axis is the diameter.

The term "*median volume particle size*" (Dᵥ50), as used herein, refers to a particle size corresponding to 50% of the volume of the sampled particles being greater than and 50% of the volume of the sampled particles being smaller than the recited Dᵥ50 value. Similarly, if used, the term "Dᵥ90" refers to a particle size corresponding to 90% of the volume of the sampled particles being smaller than and 10% of the volume of the sampled particles being greater than the recited Dᵥ90 value.

The term "*liquid*" herein means in a liquid state at room temperature and at atmospheric pressure. Analogously, the term "*solid*" means in a solid state at room temperature and at atmospheric pressure. Solid state is defined as the state of matter in which materials are not fluid but retain their boundaries without support, the atoms or molecules occupying fixed positions with respect to each other and unable to move freely.

As used herein, the term "*metallic*" encompasses elemental metal, metal alloys and metal composites. As exemplary metals and metallic alloys, mention may be made of: aluminum; aluminum alloys; bronze; beryllium; beryllium alloys; chromium; chromium alloys; cobalt; cobalt alloys; copper; copper alloys; gold; iron; iron alloys; steels; magnesium; magnesium alloys; nickel; nickel alloys; lead; lead alloys; tin; tin alloys, such as tin-bismuth and tin-lead; zinc; zinc alloys; and, superalloys, such as International Nickel 100 (IN-100) or International Nickel 718 (IN-718). Representative steels include: crucible steel; carbon steel; spring steel; alloy steel; maraging steel; and, stainless steel, inclusive of austenitic stainless steel, ferritic stainless steel, duplex stainless steel, and Martensitic stainless steel.

Herein an "*electrically conductive*" component refers to any component through which an electrical current can flow and/or which can be configured in an electrical circuit. More particularly, the definition "*electrically conductive*" characterizes components having an electrical conductivity at room temperature of at least 1 × 10⁵ Sm⁻¹.

The terms "*surface electrical conductivity*" and "*volume electrical conductivity*" are used in accordance with their standard meanings given in ASTM D1711-22 Standard Terminology Relating to Electrical Insulation*.* Electrical conductivity may be measured in accordance with ASTM 257-14 (2021) Standard Test Methods for DC Resistance or Conductance of Insulating Materials*.*

The term "*electrically non-conductive substrate*" as used herein references a substrate having a volume electrical conductivity of less than 1 Sm⁻¹,typically less than 1 × 10⁻⁵ Sm⁻¹ or less than 1 × 10⁻⁸ Sm⁻¹.

The term "*carbon nanostructures*" refers to structures such as nanotubes, nanorods, nanocubes and nanodiamonds. The term also encompasses polymeric structures formed by nantotubes which are interdigitated and/or which share common walls: in such polymeric structures, carbon nanotubes may be deemed to represent the basic monomeric unit.

The term "*film*" as used herein denotes a material sample having at least two surfaces that at least generally oppose each other and are separated by the thickness of the sample. The term "*film*" herein may include one or more layers or lamina. Formation of samples into films may be accomplished by a variety of art disclosed techniques of which coating and casting may be mentioned as examples.

As used herein, the term "*release liner*" refers to a thin flexible sheet which, after being placed in intimate contact with an adhesive surface may be subsequently removed without damaging the adhesive coating. Release liners may typically have a thickness of from 20 to 500 microns, such as from 20 to 250 microns or from 20 to 200 microns. Illustrative materials of which the release liner may comprise or consist include: polyethylene; polypropylene; polyesters, such as polyethylene terephthalate (PET) and polybutylene terephthalate (PBT); cellulose acetate; polyvinylchloride; polyvinylidene fluoride; and, paper substrates coated or laminated with the aforementioned thermoplastics. For completeness, the coated papers or thermoplastic materials are often siliconized or otherwise treated with a release agent to impart improved release characteristics.

As is known in the art, release liners are typically left in place for storage and transport and only removed when a bonding operation is to be performed. The release liners thereby perform a number of functions, including preventing contamination of the composition, facilitating handling thereof, providing support thereto and providing for the conveyance of information or identifying data.

As used herein, the term "*carrier*" refers to a material onto which a cured film of an adhesive composition can be coated so as to stabilize the film. The carrier can add thickness to the article so as to improve handling. The carriers itself may typically have a thickness of from 20 to 500 microns, such as from 20 to 250 microns or from 20 to 200 microns. The carrier substrate differs from a release liner in that it cannot be removed from the cured film without deleteriously effecting the integrity of the cured film. The carrier may be flexible and may conventionally be selected from polymeric films, metal foils, foams, cloths, and combinations thereof. For example, the carrier substrate may be selected from the group consisting of polyester, polypropylene, polyethylene, foam and paper.

As used herein, the term "*transfer film*" refers to a film, for example an adhesive film, in the absence of a backing, such as a release liner or carrier.

The term "*frame*" as used herein encompasses any rigid structure that provides structural support to an object, in particular an electronic component. Whilst a frame may be configured in a variety of different shapes and configurations, the term encompasses rigid structures which may at least partially surround or enclose said objects.

An "*integrant*" of a frame or electronic component refers herein to a designated region thereof which is selected for the bonding of an adherend thereto. Whilst it is not precluded that the integrant may be disposed at the edge or corner of the frame or component, the integrant will more typically be a planar region. The integrant should possess structural integrity and thereby have the ability to bear load, including its own weight, whilst resisting breakage, bending or collapse.

The term "*electronic component*" denotes any component, member or apparatus which fulfils any electric, magnetic and/or electronic functionality. This means that electric, magnetic and/or electromagnetic signals may be applied to and/or generated by the electronic component during regular use. Exemplary electronic components include but are not limited to: batteries; battery cells; (micro)processors; signal processors; displays; capacitors; resistors; transistors; medical application devices, such as a glucose delivery device or an automatic defibrillator; global positioning system (GPS) receivers; sensors, such as biometric sensors, temperature sensors, moisture sensors, velocity sensors and accelerometers; and, antennas. The present disclosure has particular utility for the housing or framing of battery cells.

*"Two-component (2K) compositions"* in the context of the present invention are understood to be compositions in which a first component (A) and a second component (B) must be stored in separate vessels because of their (high) reactivity. The two components are mixed before or during application and then react, typically without additional activation, with bond formation and thereby formation of a polymeric network. Herein higher temperatures may be applied in order to accelerate the crosslinking reaction.

As used herein the term "*electrochemically debondable*" means that, after curing of the adhesive, the bond strength can be weakened by at least 50% upon application of an electrical potential of 1V for a duration of 60 minutes. The cured adhesive is applied between two substrates which are bonded by said adhesive so that an electric current is running through the adhesive bond line. Bond strength is measured by Tensile Lap Shear (TLS) test performed at room temperature and based upon ASTM D3163-01 *Standard Test Method for Determining Strength of Adhesively Bonded Rigid Plastic Lap-Shear Joints in Shear by Tension Loading.* The bond overlapping area for this determination should be 2.5 cm × 2.5 cm with a bond thickness of 0.1 cm (40 mil).

The term "*electrolyte*" is used herein in accordance with its standard meaning in the art as a substance containing free ions which can conduct electricity by displacement of charged carrier species. The term is intended to encompass molten electrolytes, liquid electrolytes, semi-solid electrolytes and solid electrolytes wherein at least one of the cationic or anionic components of their electrolyte structure is essentially free for displacement, thus acting as charge carrier.

The curable adhesive compositions of the present disclosure and the cured film adhesives obtained therefrom possess "*electrolyte functionality*" in that the adhesive material permits the conduction of ions, either anions, cations or both. The electrolyte functionality is understood to derive from the ability of the compositions and cured adhesives to solvate ions of at least one polarity.

The term "*faradaic reaction*" means an electrochemical reaction in which a material is oxidized or reduced.

The term "*curing*" or "*cure*" refers herein to the hardening of a composition through reaction of compounds contained therein. Such reactions may include (co)polymerization reactions, crosslinking reactions and / or reactions with a curing agent present within or introduced into a curable composition.

The term "*cure accelerator*" is intended herein to encompass any material which is a cure accelerator (or curing agent) for the reactive functional compounds disclosed herein. The accelerator may be of either the catalytic or reactive type.

As used herein, the term "*monomer*" refers to a substance that can undergo a polymerization reaction to contribute constitutional units to the chemical structure of a polymer. The term "*monofunctional*", as used herein, refers to the possession of one polymerizable moiety. The term "*polyfunctional*", as used herein, refers to the possession of more than one polymerizable moiety.

As used herein, the term "*epoxide*" denotes a compound characterized by the presence of at least one cyclic ether group, namely one wherein an ether oxygen atom is attached to two adjacent carbon atoms thereby forming a cyclic structure. The term is intended to encompass monoepoxide compounds, polyepoxide compounds (having two or more epoxide groups) and epoxide terminated prepolymers. The term "*monoepoxide compound*" is meant to denote epoxide compounds having one epoxy group. The term "*polyepoxide compound*" is meant to denote epoxide compounds having at least two epoxy groups. The term *"diepoxide compound"* is meant to denote epoxide compounds having two epoxy groups.

The epoxide may be unsubstituted but may also be inertly substituted. Exemplary inert substituents include chlorine, bromine, fluorine and phenyl.

As employed herein a "*primary amino group*" refers to an NH₂ group that is attached to an organic radical, and a "*secondary amino group*" refers to an NH group that is attached to two organic radicals, which may also together be part of a ring. The term "*tertiary amine*" thus references a nitrogen bearing moiety of which a nitrogen atom is not bound to a hydrogen atom. Where used, the term "*amine hydrogen*" refers to the hydrogen atoms of primary and secondary amino groups.

As used herein, the term "*equivalent* (*eq*.*")* relates, as is usual in chemical notation, to the relative number of reactive groups present in the reaction. The term "*equivalent weight"* as used herein refers to the molecular weight divided by the number of a function concerned. As such, "*epoxy equivalent weight*" (EEW) means the weight of resin, in grams, that contains one equivalent of epoxy.

The "*amine equivalent weight*" is a calculated value (g/eq.) determined from the amine number. That amine number is determined by titration of the amine acetate ion by a dilute, typically 1N HCl solution. For a pure material, the amine number can be calculated using the molecular weights of the pure compound and KOH (56.1 g/mol).

The term "*Lewis acid*" used herein denotes any molecule or ion - often referred to as an electrophile - capable of combining with another molecule or ion by forming a covalent bond with two electrons from the second molecule or ion: a Lewis acid is thus an electron acceptor.

As used herein, "*(meth)acryl*" is a shorthand term referring to "*acryl*" and/or "*methacryl*". Thus the term "*(meth)acrylamide*" refers collectively to acrylamide and methacrylamide.

As used herein, "*C₁-Cₙ alkyl*" group refers to a monovalent group that contains 1 to n carbons atoms, that is a radical of an alkane and includes straight-chain and branched organic groups. As such, a "*C₁-C₄ alkyl*" group refers to a monovalent group that contains from 1 to 4 carbons atoms, that is a radical of an alkane and includes straight-chain and branched organic groups. Examples of alkyl groups include, but are not limited to: methyl; ethyl; propyl; isopropyl; n-butyl; isobutyl; sec-butyl; and, tert-butyl. In the present invention, such alkyl groups may be unsubstituted or may be substituted with one or more halogen. Where applicable for a given moiety (R), a tolerance for one or more non-halogen substituents within an alkyl group will be noted in the specification.

The terms "*alkylene group*" refers to a group that are radicals of a linear, branched or cyclic alkane, which group may be substituted or unsubstituted and may optionally be interrupted by at least one heteroatom.

The term "*C₁-Cₙ hydroxyalkyl*" as used herein refers to an HO-(alkyl) group having from 1 to n carbon atoms, where the point of attachment of the substituent is through the oxygen-atom and the alkyl group is as defined above.

An *"alkoxy group"* refers to a monovalent group represented by -OA where A is an alkyl group: non-limiting examples thereof are a methoxy group, an ethoxy group and an iso-propyloxy group. The term *"alkoxylated"* as used herein means comprising at least one alkoxy group.

As used herein, "*C₂-C₆ alkenyl*" group refers to an aliphatic carbon group that contains 2 to 6 carbon atoms and at least one double bond disposed in any position. The alkenyl group can be straight chained, branched or cyclic and may optionally be substituted with one or more halogen. Where applicable for a given moiety (R), a tolerance for one or more non-halogen substituents within an alkenyl group will be noted in the specification. The term "*alkenyl*" also encompasses radicals having "*cis*" and "*trans*" configurations, or alternatively, "E" and "Z" configurations, as appreciated by those of ordinary skill in the art. In general, however, a preference for unsubstituted alkenyl groups containing from 2 to 6 (C₂-C₆) or from 2 to 4 (C₂-C₄) carbon atoms should be noted. And Examples of C₂-C₆ alkenyl groups include, but are not limited to: ethenyl; 1-propenyl; 2-propenyl; 1-methylethenyl; 1-butenyl; 2-butenyl; 4-methylbutenyl; 1-pentenyl; 2-pentenyl; 3-pentenyl; 4-pentenyl; 4-methyl-3-pentenyl; 1-hexenyl; 3-hexenyl; and, 5-hexenyl.

The term "*C₃-C₆ cycloalkyl*" as used herein means an optionally substituted, saturated cyclic hydrocarbon having 3-6 carbon atoms. In the present invention, such cycloalkyl groups may be unsubstituted or may be substituted with one or more halogen. Where applicable for a given moiety (R), a tolerance for one or more non-halogen substituents within a cycloalkyl group will be noted in the specification. Exemplary cycloalkyl groups include cyclopropyl, cyclobutyl, cyclopentyl or cyclohexyl groups.

As used herein, "*C₃-C₆ cycloalkylene*" means a divalent radical formed by the removal of two hydrogen atoms from one or more rings of a cycloalkyl group having from 3 to 6 carbon atoms.

As used herein, "*C₂-C₁₈ alkenyl*" refers to hydrocarbyl groups having from 2 to 18 carbon atoms and at least one unit of ethylenic unsaturation. The alkenyl group can be straight chained, branched or cyclic and may optionally be substituted with one or more halogen. Where applicable for a given moiety (R), a tolerance for one or more non-halogen substituents within an alkenyl group will be noted in the specification. The term "*alkenyl*" also encompasses radicals having "*cis*" and "*trans*" configurations, or alternatively, "*E*" and "Z" configurations, as appreciated by those of ordinary skill in the art. Examples of said C₂-C₂₀ alkenyl groups include, but are not limited to: -CH=CH₂;-CH=CHCH₃; -CH₂CH=CH₂; -C(=CH₂)(CH₃); -CH=CHCH₂CH₃; -CH₂CH=CHCH₃;-CH₂CH₂CH=CH₂; -CH=C(CH₃)₂; -CH₂C(=CH₂)(CH₃); -C(=CH₂)CH₂CH₃; -C(CH₃)=CHCH₃;-C(CH₃)CH=CH₂; -CH=CHCH₂CH₂CH₃; -CH₂CH=CHCH₂CH_{3;} -CH₂CH₂CH=CHCH₃;-CH₂CH₂CH₂CH=CH₂; -C(=CH₂)CH₂CH₂CH₃; -C(CH₃)=CHCH₂CH₃; -CH(CH₃)CH=CHCH_{;}-CH(CH₃)CH₂CH=CH₂; -CH₂CH=C(CH₃)₂; 1-cyclopent-1-enyl; 1-cyclopent-2-enyl; 1-cyclopent-3-enyl; 1-cyclohex-1-enyl; 1-cyclohex-2-enyl; and, 1-cyclohexyl-3-enyl.

As used herein, an "*C₆-C₁₈ aryl*" group used alone or as part of a larger moiety - as in "*aralkyl group*" - refers to monocyclic, bicyclic and tricyclic ring systems in which the monocyclic ring system is aromatic or at least one of the rings in a bicyclic or tricyclic ring system is aromatic. The bicyclic and tricyclic ring systems include benzofused 2-3 membered carbocyclic rings. In the present disclosure, such aryl groups may be unsubstituted or may be substituted with one or more halogen. Where applicable for a given moiety (R), a tolerance for one or more non-halogen substituents within an aryl group will be noted in the specification. Exemplary aryl groups include: phenyl; (C₁-C₄)alkylphenyl, such as tolyl and ethylphenyl; indenyl; naphthalenyl, tetrahydronaphthyl, tetrahydroindenyl; tetrahydroanthracenyl; and, anthracenyl.

As used herein, "*alkylaryl*" refers to alkyl-substituted aryl groups and *"substituted alkylaryl"* refers to alkylaryl groups further bearing one or more substituents as set forth above. Further, as used herein *"aralkyl"* means an alkyl group substituted with an aryl radical as defined above.

The term *"hetero"* as used herein refers to groups or moieties containing one or more heteroatoms, such as N, O, Si and S. Thus, for example *"heterocyclic"* refers to cyclic groups having, for example, N, O, Si or S as part of the ring structure. "*Heteroalkyl*", "*heterocycloalkyl*" and "*heteroaryl*" moieties are alkyl, cycloalkyl and aryl groups as defined hereinabove, respectively, containing N, O, Si or S as part of their structure.

The term "*heterocyclyl*" refers to a monovalent chain of carbon and heteroatoms, wherein the heteroatoms are selected from N, O, Si or S, a portion of which, including at least one heteroatom, form a ring.

The term *"substituted"* refers to substitution with at least one suitable substituent. For completeness: the substituents may connect to the specified group or moiety at one or more positions; and, multiple degrees of substitution are allowed unless otherwise stated. Further, the terms *"substitution"* or *"substituted with"* include the implicit proviso that such substitution is in accordance with permitted valence of the substituted atom and the substituent, and that the substitution results in a stable compound that does not spontaneously undergo transformation by, for instance, rearrangement, cyclization or elimination.

The term *"substantially free"* is intended to mean that the constituent, component, compound, moiety, functional group, element, ion or the like is not deliberately added to the subject material and is present, at most, in only trace amounts which will have no (adverse) effect on the desired properties of the material. As regards compositions, an exemplary trace amount is less than 1000 ppm by weight of the composition. The term *"substantially free"* encompasses those embodiments where the specified compound, moiety, functional group, element, ion, or other like component is completely absent from the subject material or is not present in any amount measurable by techniques generally used in the art.

The term *"anhydrous"* as used herein has equivalence to the term *"substantially free of water".* Water is not deliberately added to a given composition and is present, at most, in only trace amounts which will have no (adverse) effect on the desired properties of the composition.

### DETAILED DESCRIPTION OF THE INVENTION

The bonded structure of the present disclosure will be described with reference to the appended drawings in which:
Figure 1 depicts a bonded structure in accordance with an embodiment of the present disclosure.
Figure 2 depicts the inclusion of the bonded structure of Figure 1 into an exemplary e-mobility apparatus.
Fig. 3a depicts the bonded substructure (S) of Figure 1 in accordance with an embodiment of the present disclosure.
Fig. 3b depicts the initial debonding of the substructure (S) upon passage of a current across that substructure.

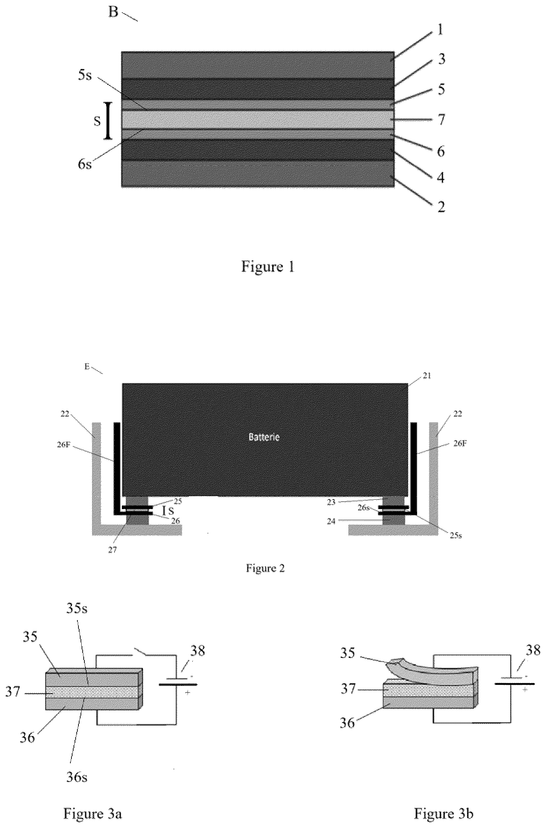

Figure 1 illustrates a bonded structure (B) according to an embodiment of the present disclosure. The structure (B) comprises a first substrate (1) and a second substrate (2) between which are interposed a first fixative layer (3), a second fixative layer (4) and a substructure (S). That substructure (S) comprises a first planar plate (5) provided with an electrically conductive inner surface (5s) and a second planar plate (6) provided with an electrically conductive inner surface (6s); a layer of electrochemically debondable adhesive (7) is interposed between said electrically conductive surfaces (5s, 6s) of the planar plates.

The first substrate (1) and the second substrate (2) may be the same or different. Whilst it is desirable that the first and second substrates be solid and rigid or inflexible, there is otherwise no particular intention to limit the nature of the substrates. For instance, independently of one another, the first and second substrates may be selected from electrically conductive substrates or electrically non-conductive substrates. Exemplary electrically conductive substrates include metallic substrates, semiconductor substrates or resinous substrates which are rendered conductive by virtue of electrically conductive elements disposed therein. Exemplary electrically non- conductive substrates include but are not limited to: resinous materials; glass; ceramics; lignocellulosic materials, including cotton, rayon (*viscose*) and cellophane; cellulose esters; and, mixtures or composites thereof.

The first fixative layer (3) and second fixative layer (4) may, independently of one another, have a thickness of from from 0.2 to 2.0 mm, for instance from 0.5 to 2.0 mm or from 1.0 to 2.0 mm. Whilst each fixative layer (3,4) is depicted in Figure 1 as being disposed on and in direct contact with, respectively the first substrate (1) and the second substrate (2), it will however be appreciated that one or more intermediate layers may be disposed between said substrates (1,2) and said layers (3,4). An electrocoat (*e-coat*) layer is a first representative example of such an intermediate layer. For metallic substrates (1, 2), a conversion coating layer is a further representative example of such an intermediate layer. Herein the term *"conversion"* refers to a treatment of the surface of a substrate which causes the surface material to be chemically converted to a different material. Typically, a metal or alloyed surface of a substrate is chemically treated to provide a tightly adherent conversion coating, all or part of which consists of a stabilized form - for instance an oxidized form - of the substrate metal. Such chemical conversion coatings can demonstrate high corrosion resistance as well as providing a strong bonding affinity for the fixative layer (3,4).

Each fixative layer (3,4) should not be thermally or electrochemically debondable: save for these conditions, each fixative layer (3,4) is not particularly limited in composition but should be operable or effective in the bonding of the substrates (1,2). Exemplary matrices for the first fixative layer (3) and the second fixative layer (4) may, independently of one another, be chosen from: epoxy adhesives; acrylic adhesives; polyurethane adhesives; cyanoacrylate adhesives; silicone adhesives; polyimide adhesives; silane modified polymers; butyls; hotmelt adhesives; and, mixtures thereof. Illustrative commercial products having utility in forming the fixative layers (3,4) include: Teroson EP5065, a two-component (2K) epoxy fixative, available from Loctite; Teroson MS 939, a modified silane fixative, available from Loctite; and, Teroson PU 6700, a two-component (2K) polyurethane fixative, available from Loctite.

To form the bonded structure (B), the first and second fixatives interposed between the substrates and the substructure (S) and subjected to a curing condition. More particularly, the first and second fixative are respectively interposed: between the first substrate and the outer surface of the first planar plate (5); and, between the second substrate and the outer surface of the second planar plate (6). For completeness, it is noted that the composition from which the layer of electrochemically debondable adhesive (7) is derived and the compositions from each the layer of fixative (3,4) are derived may be independently cured in the formation of the bonded structure. Alternatively, the respective compositions may be simultaneously cured where the operable curing conditions for each composition are compatible.

In certain embodiments, spacers (*not shown*) may be disposed within either one or both fixative layers (3, 4), interposed between the respective planar plate (5, 6) and substrate (1, 2). Any spacer should conventionally be detachable from the adherends without damaging said elements of the bonded structure. For surety, such spacers are optional and may be absent in certain variants of the bonded structure. However, spacers can serve to firmly fix the spatial relationship between a given substrate (1,2) and a planar plate (5,6) and, in doing so, moderate the effects of vibrations and impacts to which a bonded structure might be subjected either *per se* or when included as a component of a larger apparatus. This is particularly germane for structures which are to be disposed within portable electronic devices or within vehicles where vibration and jolting can displace adherends.

Where more than one spacer is present, the two spacers may be identical but it is not precluded that individual spacers may possess different geometries and / or be comprised of different materials. Moreover, a given spacer need not be unitary but may comprise a plurality of elements provided this does not compromise the mechanical strength of the spacer or diminish the support role thereof. Still further, the number of spacers and the disposal of the spacers within a given fixative layer (3,4) may be moderated to optimize that support function. The spacers may be disposed at the extremities of a given fixative layer (3,4); alternatively or additionally said spacers may interrupt a given fixative layer (3,4).

The spacers should preferably be formed from electrically insulating materials which are flame retardant, which possess a suitable hardness and which are suited to meet impact strain requirements, for example by providing shock absorption or flexure for a support system. A Shore A hardness of from 20 to 95, for instance from 30 to 90 might be mentioned in this context. Glass spacers have been utilized in certain circumstances. Also, exemplary polymeric materials having utility as spacers include but are not limited to: polyvinyl chloride; polyalkylenes, such as polyethylene and polypropylene; polyacrylates such as polymethyl methacrylate; conjugated diene homopolymers, such as polychloroprene, polybutadiene and polyisoprene; copolymers of conjugated dienes; copolymers of conjugated dienes with aromatic vinyl compounds, such as copolymers of butadiene or isoprene with styrene; silicones; and, polyurethanes. A preference for injection moldable polymeric materials may be noted.

Referring back to Figure 1, the two planar plates (5,6) should each independently have a thickness of from 0.5 to 2.5 mm, for example from 1.0 to 2.5 mm or from 1.5 to 2.5 mm. The layer of electrochemically debondable adhesive (7) interposed between the planar plates (5, 6) should typically have a thickness of of from 10 to 1000 µm, for example from 10 to 500 µm or from 30 to 300 µm.

The composition of first (5) and second (6) planar plates may be the same or different. That aside, the material of which each planar plate (5, 6) may be comprised is not itself particularly limited save for the condition that each plate is provided with an electrically conductive surface (5s, 6s).

In an embodiment, a planar plate (5,6) may consist of a material which possesses bulk electrical conductivity. Exemplary materials in this regard include but are not limited to: metallic materials; semiconductor materials; resinous materials which are rendered conductive by virtue of electrically conductive elements disposed therein, examples of which elements include silver filaments, single-walled carbon nanotubes and multi-walled carbon nanotubes; or, conducting oxides, examples of which include doped indium oxides, such as indium tin oxide (ITO), doped zinc oxide, antimony tin oxide, cadmium stannate and zinc stannate. It is preferred herein that at least one planar plate (5, 6) consists of a material which possesses bulk electrical conductivity selected from aluminium, aluminium alloy or steel.

In an alternative embodiment, a planar plate (5,6) may comprise: a bulk material which does not possess electrical conductivity; and, an electrically conductive material disposed on that bulk material to provide an electrically conductive surface (5s, 6s). In this embodiment, exemplary bulk materials include but are not limited to: resinous materials; glass; ceramics; lignocellulosic materials, including cotton, rayon (*viscose*) and cellophane; cellulose esters; and, mixtures or composites thereof. The electrically conductive surface (5s, 6s,) may be constituted by *inter alia*: a metallic film; a metallic mesh or grid; or, deposited metal particles. The selection of the conductive material aside, the skilled artisan will recognize that the efficacy of the debonding operation may be diminished where the electrically conductive surfaces (5s, 6s) are in the form of a grid or mesh which offers limited contact with the layer of electrochemically debondable adhesive (7).

The illustrated bonded structure of Figure 1 may have utility in the bonding of electronic components either to one another or to a frame, which frame may optionally be disposed within an assembly comprising a plurality of electronic components in order to position or constrain one or more of said electronic components. Such an assembly may, for example, be provided with an encasement or other supporting arrangement in order to mitigate impacts or compressive, tensile, torsional, shear or bending stresses imposed thereon. The assembly will contain electrical interconnects which enable a voltage to be applied across electrically conductive surfaces provided on the frame and electronic component(s) thereof. The requisite power source to provide this potential difference may be disposed within the encasement or external to the encasement.

By way of example, it is envisaged that the bonded structure may serve to debondably fix one or more electronic components to a frame, such as a frame disposed within a encasement of an electric vehicle. The debondable fixing of a battery within such an encasement may be specifically mentioned and an example thereof is depicted in Figure 2. In the depicted assembly (E), there is provided a battery (21) and a first frame (22) between which are interposed a first fixative (23), a second fixative (24) and substructure (S). The substructure (S) comprises a first planar plate (25) provided with an electrically conductive inner surface and a second planar plate (26) provided with an electrically conductive inner surface; a layer of electrochemically debondable adhesive (27) is interposed between said electrically conductive surfaces (25s, 26s) of the planar plates (25, 26). The second planar plate (26) is provided by an integrant (I^{F}) of a second frame (26F) of the assembly.

The means by which the above described structures may be debonded will be discussed with reference to the constituent substructure (S) thereof. As shown in Figure 3a appended hereto, the bonded substructure (S) is provided in which a layer of electrochemically debondable adhesive (37) is interposed between and in direct contact with the electrically conductive inner surfaces (35s, 36s) of plates (35, 36). Each electrically conductive surface (35s, 36s) is in electrical contact with an electrical power source (38) which may be a battery or an AC-driven source of direct current (DC). The positive and negative terminals of that power source (38) are shown in one fixed position but the skilled artisan will of course recognize that the polarity of the system can be reversed.

When an electrical voltage is applied between each electrically conductive surface (35s, 36s), current is supplied to the layer of electrochemically debondable adhesive (37) disposed therebetween. This induces electrochemical reactions at the interface of the surfaces (35s, 36s) and the adhesive composition, which electrochemical reactions are understood as oxidative at the positively charged or anodic interface and reductive at the negatively charged or cathodic interface. The reactions are considered to weaken the adhesive bond between the plates (5, 6) allowing the easy removal of the debondable composition from said plates (35, 36).

As depicted in Figures 3b, the debonding occurs at the negative interface, that interface between the layer of electrochemically debondable adhesive (37) and the electrically conductive surface (35s) that is in electrical contact with the negative electrode. By reversing current direction prior to separation of the substrates, the adhesive bond may be weakened at both substrate interfaces.

It is however noted that the composition of the layer of electrochemically debondable adhesive (37) may be moderated so that debonding occurs at either the positive or negative interface or simultaneously from both. For some embodiments, a voltage applied across both surfaces so as to form an anodic interface and a cathodic interface will cause debonding to occur simultaneously at both the anodic and cathodic adhesive / substrate interfaces. In an alternative embodiment, reversed polarity may be used to simultaneously disbond both substrate / adhesive interfaces if the cured film does not respond at both interfaces to direct current. The current can be applied with any suitable waveform, provided that sufficient total time at each polarity is allowed for debonding to occur. Sinusoidal, rectangular and triangular waveforms might be appropriate in this regard and may be applied from a controlled voltage or a controlled current source.

Without intention to limit the present invention, it is considered that the debonding operation may be performed effectively where at least one and preferably both of the following conditions are instigated: a) an applied voltage of from 0.5 to 200 V, for example from 10 to 100 V; and, b) the voltage being applied for a duration of from 1 second to 120 minutes, for example from 1 second to 60 minutes. Where the release of the conductive surface (35s, 36s) of a plate (35, 36) from the adhesive layer (37) is to be facilitated by the application of a force - exerted via a weight or a spring, for instance - the potential might only need to be applied for the order of seconds.

With reference to Figures 1 and 2, the debonding of the substructure (S) in the above-described manner permits the first (1,21) and second (2,22) substrates to be separated from one another. The separated substrates (1,2) may still respectively have fixative (3, 23, 4, 24) and planar plates (5, 25, 6, 26) residually disposed thereon. These residues may be removed to enable the re-use or recycling of the substates and / or the planar plates, where desired.

### FORMATION OF THE SUBSTRUCTURE (S)

As noted above, the substructure (S) comprises a first planar plate (5) provided with an electrically conductive inner surface (5s) and a second planar plate (6) provided with an electrically conductive inner surface (6s); a layer of electrochemically debondable adhesive (7) is interposed between said electrically conductive surfaces (5s, 6s) of the planar plates. More particularly, the layer of electrochemically debondable adhesive (7) has electrolyte functionality and comprises: a non-polymerizable electrolyte; and, a cured resinous matrix (M^{R}). The cured resinous matrix (M^{R}) provides the continuous phase of the adhesive layer (7) in which the non-polymerizable electrolyte is dispersed. Such an adhesive layer (7) is obtained from a curable composition, which composition may be an one component (1K) or two-component (2K) composition but which necessarily comprises: said non-polymerizable electrolyte; a curable resin (C^{R}); and, optionally additive and adjunct materials. Examples of such curable compositions will be discussed herein below.

With reference to Figures 1 to 3 and without intention to limit the disclosure, two alternative methods are envisaged by which the substructure (S) may be obtained from the described curable compositions. A first method (I) comprises: interposing the curable composition between the conductive surfaces of the first (5) and second (6) planar plates; and, subsequently curing said interposed composition. A second method (II) comprises: forming an article of manufacture (A) comprising an adhesive transfer film, said film being obtained by the curing of said curable composition; separating the adhesive transfer film from the article of manufacture; applying said adhesive transfer film to the conductive surface (5s) of the first planar plate (5); bringing the first planar plate (5) into contact with the second planar plate (6) to interpose the adhesive transfer film between the conductive surfaces (5s, 6s) of said first and second planar plates; and, heating the interposed adhesive transfer film.

Common to both of these methods (I, II) is that, prior to interposing any material between the first (5) and second (6) planar plates, it is often advisable to pre-treat the relevant surfaces thereof. Any such pre-treatment should comprise at least one of: cleaning the surface(s); abrading the surface(s); applying an anti-corrosion coating or applying a conversion coating or conversion treatment thereto; and, applying a primer composition thereto.

Cleaning serves to remove foreign matter from the surface. Cleaning treatments are known in the art and can be performed in a single or multi-stage manner constituted by, for instance, the use of one or more of: an etching treatment with an acid suitable for the substrate and optionally an oxidizing agent; sonication; plasma treatment, including chemical plasma treatment, corona treatment, atmospheric plasma treatment and flame plasma treatment; immersion in a waterborne alkaline degreasing bath; treatment with a waterborne cleaning emulsion; treatment with a cleaning solvent, such as carbon tetrachloride or trichloroethylene; and, water rinsing, preferably with deionized or demineralized water. In those instances where a waterborne alkaline degreasing bath is used, any of the degreasing agent remaining on the surface should desirably be removed by rinsing the substrate surface with deionized or demineralized water.

The terms *"conversion coating"* and *"conversion treatment"* refer to a treatment of the surface of a substrate which causes the surface material to be chemically converted to a different material. Typically, a metal or alloyed surface, presenting the defect area, is chemically converted to provide a tightly adherent coating, all or part of which consists of a stabilized form - for instance an oxidized form - of the substrate metal. Such chemical conversion coatings can demonstrate high corrosion resistance as well as providing a strong bonding affinity for subsequent coating layers.

In some embodiments, the adhesion of the adhesive transfer film or adhesive composition to the preferably pre-treated substrate may be facilitated by the application of a primer thereto. Indeed primer compositions may be necessary to ensure efficacious fixture times of the cured (*film*) adhesive on inactive substrates.

Also common to both of these methods (I, II) is that the one component (1K), two component (2K) or multicomponent curable composition is subjected to a curing condition which may, in certain circumstances, be preceded by a thermal condition under which any solvent present may be permitted to evaporate. There is no particular intention to limit the temperature at which the curing of the applied curable compositions may actually be effected: for instance, the composition may simply be held at a given temperature - such as room temperature - for a sufficient duration to permit the curing reaction to reach completion. However, for practical purposes, the complete curing of the applied curable compositions should typically occur at a temperature in the range of from 75°C to 250°C, such as from 80°C to 200°C or from 90°C to 200°C: this elevated temperature may be applied for a duration of from 0.1 to 10 hours, such as from 1 to 8 hours or from 1 to 5 hours.

The curing temperature that is suitable depends on the specific compounds present and the desired curing rate and can be determined in the individual case by the skilled artisan, using simple preliminary tests if necessary. For instance, the progress of the curing reaction at a given temperature may be monitored via Infrared (IR) Spectroscopy or via Nuclear Magnetic Resonance (NMR) measurements. That aside, curing at lower temperatures within the aforementioned ranges is advantageous as it obviates the requirement to substantially heat or cool the mixture from the usually prevailing ambient temperature. Where applicable, however, the temperature of the mixture formed from respective ingredients of a one-component (1K) composition or from the respective components of a two-component (2K) composition may be raised above the mixing temperature and / or the application temperature using conventional means, including microwave induction.

In certain circumstances, the curing condition may comprise an inert gas atmosphere: suitable inert gases which may be mentioned include nitrogen, helium and argon. Precaution should be used when common nitrogen gases are used as a blanket, because such nitrogen may not be dry enough on account of its susceptibility to moisture entrainment; the nitrogen may require an additional drying step before use herein.

Method (I): In this exemplary method, the curable compositions are applied to the preferably pre-treated surface (5s, 6s) of one or both metal plates (5,6) by conventional application methods such as: dipping; immersion; brushing; roll coating; bar coating; doctor-blade application; printing methods; and, spraying methods, including but not limited to air-atomized spray, air-assisted spray, airless spray and high-volume low-pressure spray.

It is recommended that the compositions - as exemplified by the above-described two-component (2K) composition - be applied to a surface at a wet film thickness of from 10 to 1000 µm, for example from 10 to 500 µm or from 30 to 300 µm. The application of thinner layers within this range is more economical and provides for a reduced likelihood of deleterious thick cured regions. However, great control must be exercised in applying thinner coatings or layers so as to avoid the formation of discontinuous cured films.

Following its application, the so-applied composition is interposed between the conductive surfaces (5s, 6s) of the first (5) and second (6) planar plates and then subjected to a curing condition as described above.

Method (II): In this alternative exemplary method, wherein an article of manufacture (A) comprising an adhesive transfer film is utilized in forming the substructure (S), the formation of this adhesive transfer film comprises applying the aforementioned curable compositions to the surfaces of a release liner or carrier by conventional application methods such as: dispensing or extrusion of the composition through one or more conduits, optionally under mixing; pouring; brushing; roll coating; knife coating; doctor-blade application; printing methods; and, spraying methods, including but not limited to air-atomized spray, air-assisted spray, airless spray and high-volume low-pressure spray. In an exemplary embodiment, the curable compositions are applied to the surface of a first release liner and either a further release liner or carrier then disposed on the applied composition: the wet film thickness of the interposed composition is then moderated by applying pressure to the obtained structure.

Independently of the method of application, it is recommended that the compositions be applied to a surface at a wet film thickness of from 10 to 1000 µm, such as from 10 to 500 µm or from 30 to 300 µm. The application of thinner layers within this range is more economical and provides for a reduced likelihood of deleterious thick cured regions in the films. However, great control must be exercised in applying thinner coatings or layers so as to avoid the formation of discontinuous cured films.

Manufacturing process parameters - including *inter alia* the particular composition used, the applied thickness thereof and the operating conditions of the manufacturing equipment - can, of course, affect the degree of orientation and, as a result, the anisotropic, tack and peel force properties of the cured film.

Exemplary articles of manufacture, which include such cured adhesive transfer films, will be described with reference to the appended drawings in which:

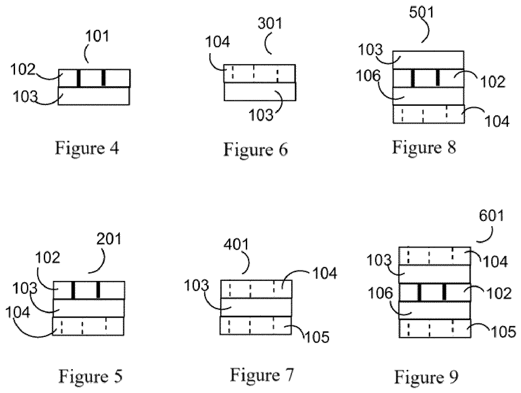

Figure 4 illustrates a single-sided tape absent a release liner according to an embodiment of the article of manufacture.
Figure 5 illustrates an embodiment of the article of manufacture that may correspond to a single-sided tape or a label with a release liner.
Figure 6 illustrates a transfer tape with one release liner according to an embodiment of the article of manufacture.
Figure 7 illustrates a transfer tape with two release liners according to an embodiment of the article of manufacture.
Figure 8 illustrates a double-sided tape with one release liner according to an embodiment of the article of manufacture.
Figure 9 illustrates a double-sided tape with two release liners according to an embodiment of the article of manufacture.

In Figure 4, a single sided tape (101) is shown which consists of a carrier (102) and a cured adhesive transfer film (103). The embodiment depicted in Figure 5 could be either a single sided tape or a label (201), which tape or label consists of a carrier (102) and a cured adhesive film (103): the cured adhesive transfer film (103) is covered with a release liner (104) to protect the cured film and prevent unwanted adhesion of the cured adhesive film (103).

Figures 6 and 7 depict transfer tapes which have particular utility for transferring the cured adhesive film from a release liner to a target surface (S¹, S²). In Figure 6, the transfer tape (301) consists of a release liner (104) coated with a cured adhesive transfer film (103) as defined herein. The release liner (104) should have release properties on both sides but should not possess equivalent release properties on those sides: consequently, when winding and unwinding the transfer tape (301) from a roll - there will be a differentiation between the release effects on the two sides of the release liner (104).

In Figure 7, the transfer tape (401) consists of a cured adhesive transfer film (103) as defined herein interposed between first (104) and second (105) release liners. The first (104) and second (105) release liners may have different release properties relative to the cured adhesive film which allows these liners (104, 105) to be removed independently of one another.

A double-sided adhesive tape (501) is depicted in Figure 8 and consists of a carrier (102) having a first adhesive transfer film (103) on a first side of the carrier (102) and a second adhesive transfer film (106) on a second side of the carrier (102). The first (103) and second (106) films may be the same of different in that they may be obtained from the same or different compositions subject to the proviso that at least one of said adhesive films is provided in accordance with the present disclosure. A release liner (104) covers and protects the second cured film (106), which liner (104) should have release properties on both sides but should not possess equivalent release properties on those sides. In these circumstances - when winding and unwinding the transfer tape (501) from a roll - there will be a differentiation between the release effects on the two sides of the release liner (104).

A second embodiment of a double-sided adhesive tape (601) is provided in Figure 9. The depicted tape (601) consists of a carrier (102) having a first adhesive transfer film (103) on a first side of the carrier (102) and a second adhesive transfer film (106) on a second side of the carrier (102). The first (103) and second (106) cured films may be the same of different, that is they may be obtained from the same or different compositions subject to the proviso that at least one of said adhesive films is provided in accordance with the present disclosure. A first release liner (104) covers and protects the first cured film (103). A second release liner (105) covers and protects the second adhesive transfer film (106). The first (104) and second (105) release liners may have different release properties relative to the adhesive transfer films (103, 106).

As noted above, the present disclosure provides for the bonding of the two metal plates of substructure (S), said method comprising the steps of: ai) providing an article (A) comprising an adhesive transfer film as described above, wherein said adhesive transfer film is disposed on a release liner and / or a carrier; and, (aii) applying the adhesive transfer film of the article (A) to the conductive surface (5s) of the first planar plate (5), wherein the release liner of the article (A), if present, is removed before and/or after step (aii)); b) bringing the first planar plate (5) into contact with a second planar plate (6) to interpose the adhesive transfer film between the conductive surfaces (5s, 6s) of said first (5) and second (6) planar plates; and, c) heating the interposed adhesive transfer film.

The step b) of mating the first and second substrates to interpose the adhesive transfer film therebetween and / or at least a fraction of the heating step c) may occur under the application of pressure. Independently of, or additional to the application of pressure, it is preferred that said step c) of this method comprises heating the interposed adhesive transfer film at a temperature of from 80°C to 250°C for a duration of from 0.1 to 5 hours, such as from 0.5 to 3 hours or from 0.5 to 2 hours.

### COMPOSITION OF THE ELECTROCHEMCIALLY DEBONDABLE ADHESIVE LAYER (7)

As mentioned above, the layer of electrochemically debondable adhesive (7) has electrolyte functionality and comprises: a non-polymerizable electrolyte; and, a cured resinous matrix (M^{R}). The cured resinous matrix (M^{R}) provides the continuous phase of the adhesive layer (7) in which the non-polymerizable electrolyte is dispersed.

Such an adhesive layer (7) is obtained from a curable composition, which composition may be an one component (1K) or two-component (2K) composition but which necessarily comprises: said non-polymerizable electrolyte; a curable resin (C^{R}); and, optionally additive and adjunct materials. The composition of adhesive layer (7) will be described with reference to the curable composition from which it is obtained.

### Non-Polymerizable Electrolyte

The curable composition should typically comprise from 0.5 to 15 wt.%, based on the weight of said composition, of non-polymerizable electrolyte: the electrolyte may preferably constitute from 0.5 to 10 wt.%, for example from 0.5 to 5 wt.%, of said composition. These quantities are preferred because a quantity greater than 15 wt.% of electrolyte, based on the weight of said composition, may result in a good debonding effect but curing of the composition may be incomplete and / or initial adhesive properties may be adversely affected. Conversely, at amounts less than 0.5 wt.%, based on the weight of said composition, the debonding effect may be compromised.

For completeness, where the layer (7) is obtained from a two component (2K) curable composition, the non-polymerizable electrolyte may be disposed in the first component, the second component or both of the first and second components.

Important electrolytes include the non-polymerizable salts of: ammonium; pyridinium; pyrrolidinium; phosphonium; imidazolium; oxazolium; guanidinium; sulfonium; and, thiazolium. In exemplary embodiments, the electrolyte of the present disclosure comprises at least one salt having a Formula selected from the group consisting of: 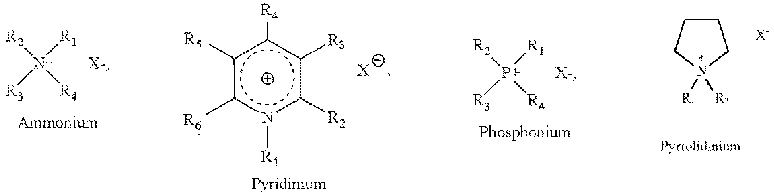 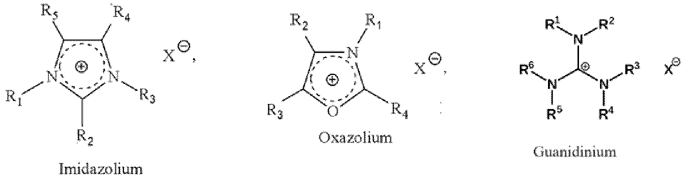 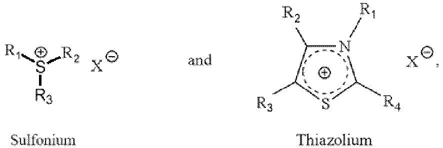 wherein: R₁, R₂, R₃, R₄, R₅ and R₆ are independently selected from hydrogen, C₁-C₁₈ alkyl,
C₃-C₁₈ cycloalkyl, C₆-C₁₈ aryl, C₇-C₂₄ aralkyl, -C(O)R^{q}, -C(O)OH, -CN or -NO₂;
R^{q} is C₁-C₆ alkyl; and,
X⁻ is a counter anion.

Where an ammonium salt is used, it may be subject to the proviso that at most three and desirably at most two of the groups R₁ to R₄ may be hydrogen.

As regards said moieties R₁ to R₆, the terms C₁-C₁₈ alkyl, C₃-C₁₈ cycloalkyl, C₆-C₁₈ aryl, C₇-C₂₄ aralkyl, expressly include groups wherein one or more hydrogen atoms are substituted by halogen atoms (e.g. C₁-C₁₈ haloalkyl) or hydroxyl groups (e.g. C₁-C₁₈ hydroxyalkyl). In particular, it is preferred that R₁, R₂, R₃, R₄, R₅ and R₆ are independently selected from hydrogen, C₁-C₁₂ alkyl, C₁-C₁₂ haloalkyl, C₁-C₁₂ hydroxyalkyl or C₃-C₁₂ cycloalkyl. For example, R₁, R₂, R₃, R₄, R₅ and R₆ may be independently selected from hydrogen, C₁-C₆ alkyl, C₁-C₆ haloalkyl or C₁-C₆ hydroxyalkyl.

There is no particular intention to limit the counter anion (X-) which may be employed in the non-polymerizable electrolytic salts. Exemplary anions may be selected from:
- Halides;
- Pseudohalides and halogen-containing compounds of the formulae PF₆ ⁻, CF₃SO₃ ⁻, (CF₃SO₃)₂N⁻, CF₃CO₂ ⁻ and CCl₃CO₂ ⁻,
- CN-, SCN- and OCN-;
- Phenates;
- Sulfates, sulfites and sulfonates of the general formulae SO₄ ²⁻, HSO₄ ⁻, SOs ²⁻, HSOs ⁻, R^{a}OSO₃ ⁻ and R^{a}SO₃ ⁻;
- Phosphates of the general formulae PO₄ ³⁻, HPO₄ ²⁻, H₂PO₄ ⁻, R^{a}PO₄ ²⁻, HR^{a}PO₄ ⁻ and R^{a}R^{b}PO₄ ⁻;
- Phosphonates and phosphinates of the general formulae R^{a}HPO₃ ⁻,R^{a}R^{b}PO₂ ⁻ and R^{a}R^{b}PO₃ ⁻;
- Phosphites of the general formulae: PO₃ ³⁻, HPO₃ ²⁻, H₂PO₃ ⁻, R^{a}PO₃ ²⁻, R^{a}HPO₃ ⁻ and R^{a}R^{b}PO₃ ⁻;
- Phosphonites and phosphinites of the general formulae R^{a}R^{b}PO₂ ⁻, R^{a}HPO₂ ⁻, R^{a}R^{b}PO⁻ and R^{a}HPO⁻;
- Carboxylic acid anions of the general formula R^{a}COO⁻;
- Hydroxycarboxylic acids anions and sugar acid anions;
- Saccharinates (salts of o-benzoic acid sulfimide);
- Borates of the general formulae BO₃ ³⁻, HBOs ²⁻, H₂BO₃ ⁻, R^{a}R^{b}BO₃ ⁻, R^{a}HBO₃ ⁻, R^{a}BO₃ ²⁻, B(OR^{a})(OR^{b})(OR^{c})(OR^{d})⁻, B(HSO₄)⁻ and B(R^{a}SO₄)⁻;
- Boronates of the general formulae R^{a}BO₂ ²⁻ and R^{a}R^{b}BO⁻;
- Carbonates and carbonic acid esters of the general formulae HCO₃ ⁻, COs ²⁻ and R^{a}CO₃ ⁻;
- Silicates and silicic acid esters of the general formulae SiO₄ ⁴⁻, HSiO₄ ³⁻, H₂SiO₄ ²⁻, H₃SiO₄ ⁻, R^{a}SiO₄ ³⁻, R^{a}R^{b}SiO₄ ²⁻, R^{a}R^{b}R^{c}SiO₄ ⁻, HR^{a}SiO₄ ²⁻, H₂R^{a}SiO₄ - and HR^{a}R^{b}SiO₄ ⁻;
- Alkyl- and arylsilanolates of the general formulae R^{a}SiO₃ ³⁻, R^{a}R^{b}SiO₂ ²⁻, R^{a}R^{b}R^{c}SiO⁻, R^{a}R^{b}R^{c}SiO₃ ⁻, R^{a}R^{b}R^{c}SiO₂ - and R^{a}R^{b}SiO₃ ²⁻;
- Pyridinates and pyrimidinates;
- Carboxylic acid imides, bis(sulfonyl)imides and sulfonylimides of the general formulae: 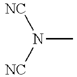 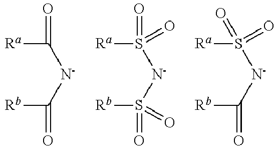
- Methides of the general formula: 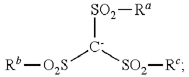
- Alkoxides and aryloxides of the general formula R^{a}O⁻; or,
- Sulfides, hydrogen sulfides, polysulfides, hydrogen polysulfides and thiolates of the general formulae S²⁻, HS-, [Sᵥ]²⁻, [HSᵥ]⁻ and [R^{a}S]⁻
in which general formulae
v is a whole positive number of from 2 to 10.
R^{a}, R^{b}, R^{c} and R^{d} are independently selected from hydrogen, halogen, C₁-C₁₂ alkyl, C₅-C₁₂ cycloalkyl, C₅-C₁₂ heterocycloalkyl, C₆-C₁₈ aryl, C₇-C₁₈ alkylaryl, C₇-C₁₈ aralkyl or C₅-C₁₈ heteroaryl.

As regards said moieties R^{a}, R^{b}, R^{c} and R^{d}, the terms C₁-C₁₂ alkyl, C₅-C₁₂ cycloalkyl, C₅-C₁₂ heterocycloalkyl, C₆-C₁₈ aryl, C₇-C₁₈ alkylaryl, C₇-C₁₈ aralkyl and C₅-C₁₈ heteroaryl expressly include groups wherein one or more hydrogen atoms are substituted by halogen atoms. For instance, CH₃, -CH₂F, -CHF₂ and -CF₃ represent exemplary C₁ alkyl groups.

Based on the definitions in the above list, preferred anions of the non-polymerizable electrolytic salts may be selected from the group consisting of: halides; pseudohalides and halogen-containing compounds as defined above; carboxylic acid anions, in particular formate, acetate, propionate, butyrate and octanoate; hydroxycarboxylic acid anions, such as lactate; pyridinates and pyrimidinates; carboxylic acid imides, bis(sulfonyl)imides and sulfonylimides; sulfates, in particular methyl sulfate and ethyl sulfate; sulfites; sulfonates, in particular methanesulfonate and p-toluenesulfonate (*tosylate*); and, phosphates, in particular dimethyl-phosphate, diethyl-phosphate and di-(2-ethylhexyl)-phosphate.

The electrolyte is preferably selected from the group consisting of 1-ethyl-3-methyl-1H-imidazol-3-um methanesulfonate, 1-ethyl-3-methyl-1H-imidazol-3-um methyl sulfate, 1-hexyl-3-methylimidazolium 2-(2-fluoroanilino)-pyridinate, 1-hexyl-3-methylimidazolium imide, 1-butyl-1-methyl-pyrrolidinium 2-(2-fluoroanilino)-pyridinate, 1-butyl-1-methyl-pyrrolidinium imide, trihexyl (tetradecyl) phospholium 2-(2-fluoroanilino)-pyridinate, cyclohexyltrimethylammonium bis(trifluormethylsulfonyl)imide, di(2-hydroxyethyl) ammonium trifluoroacetate, N,N-dimethyl (2-hydroxyethyl) ammonium octanoate, methyltrioctylammonium bis (trifluoromethylsulfonyl) imide, tributylmethylammonium bis(fluorosulfonyl)imide, N-ethyl-N-N-N-N-tetramethylguanidinium trifluoromethanesulfonate, guanidinium trifluoromethanesulfonate, 1-butyl-4-methylpyridinium bromide, 1-butyl-3-methylpyridinium tetrafluoroborate, 1-butyl-3-hydroxymethylpyridinium ethylsulfate, N-propyl-N-methylpyrrolidinium bis(fluorosulfonyl) imide, 1-butyl-1-methylpyrrolidinium bis(trifluoromethylsulfonyl) imide, 1-butyl-methylpyrrolidinium tris (pentafluoroethyl) trifluorophosphate, 3-methyl imidazolium ethylsulfate, 1-ethyl-3-methylimidazolium chloride, 1-ethyl-3-ethyl-methylimidazolium bromide, 1-butyl-3-methylimidazolium chloride, 1-hexyl-3-methylimidazolium chloride, 1-octyl-3-methylimidazolium chloride, 1-methyl-3-octylimidazolium chloride, 1-propyl-3-methylimidazolium iodide, 1-butyl-3-methylimidazolium tetrafluoroborate, 1-butyl-3-methylimidazolium methyl sulfate, 1-butyl-3-methylimidazolium methanesulfonate, 1-butyl-3-methylimidazolium trifluoromethanesulfonate, 1-butyl-3-methylimidazolium hexafluorophosphate, 1-ethyl-3-methylimidazolium bis(trifluoromethylsulfonyl)imide, 1-butyl-3-methylimidazolium bis(trifluoromethylsulfonyl)imide, 1-ethyl-3-methylimidazolium trifluoromethanesulfonate, 1-butyl-3-methylimidazolium bis(fluorosulfonyl)imide, 1-ethyl-3-methylimidazolium bis(fluorosulfonyl)imide, 1-butyl-3-methyl-imidazolium-fluorosulfonate, 1-dodecyl-3-methylimidazolium bis(fluorosulfonyl)imide, 1-butyl-2,3-dimethylimidazolium tetrafluoroborate, 1-butyl-2,3-dimethylimidazolium hexafluorophosphate, 1-butylimidazol, 1-methylimidazolium tetrafluoroborate, tributylmethylphosphonium bis(fluorosulfonyl)imide, tetrabutylphosphonium tris (pentafluoroethyl) trifluorophosphate, trihexyl(tetradecyl)phosphonium bis(trifluoromethylsulfonyl)imide, trihexyl (tetradecyl) phosphonium tetrafluoroborate, tributylmethylphosphonium methyl sulfate and mixtures thereof.

A particular preference may be mentioned for the use of at least one of trihexyl(tetradecyl)phosphonium bis(trifluoromethylsulfonyl)imide, tributylmethylphosphonium bis(fluorosulfonyl) imide, tributylmethyl- phosphonium methyl sulfate, tributylmethylammonium bis(fluorosulfonyl)imide, N-propyl-N-methylpyrrolidinium bis(fluorosulfonyl) imide, 1-ethyl-3-methyl-1H-imidazol-3-um methyl sulfate, 1-ethyl-3-methyl-1H-imidazol-3-um methanesulfonate, 1-ethyl-3-methylimidazolium trifluoromethanesulfonate, 1-ethyl-3-methylimidazolium bis(trifluoromethylsulfonyl)imide, 1-butyl-3-methylimidazolium methyl sulfate, 1-butyl-3-methylimidazolium methanesulfonate, 1-butyl-3-methyl-imidazolium-fluorosulfonate, 1-butyl-3-methylimidazolium trifluoromethanesulfonate, 1-butyl-3-methylimidazolium bis(trifluoromethylsulfonyl)imide, 1-butyl-3-methylimidazolium bis(fluorosulfonyl)imide and 1-dodecyl-3-methylimidazolium bis(fluorosulfonyl)imide.

### Additives and Adjunct Ingredients

The curable composition will typically further comprise adjuvants and additives that can impart improved properties to that layer. For instance, the adjuvants and additives may impart one or more of: improved elastic properties; improved elastic recovery; longer enabled processing time; faster curing time; and, lower residual tack. Included among such adjuvants and additives are: accelerators; solubilizers; tougheners; plasticizers; stabilizers including UV stabilizers; antioxidants; wax; reactive diluents; dessicants or moisture scavengers; adhesion promoters; fungicides; flame retardants; rheological adjuvants; color pigments or color pastes; solvents; and, non-reactive diluents.

Such adjuvants and additives can be used in the curable composition in such combination and proportions as desired, provided they do not adversely affect the nature and essential properties of the adhesive layer (7) obtained therefrom. While exceptions may exist in some cases, these adjuvants and additives should not *in toto* comprise more than 50 wt.% of the total weight of the composition and preferably should not comprise more than 45 wt.% of the composition.

As the present disclosure envisages the derivation of the electrochemically debondable adhesive layer (7) from both one (1K) and two (2K) component curable compositions, it is noted as regards the latter alternative that, in general, adjunct materials and additives which contain reactive groups will be blended into the appropriate part of a two part (2K) composition to ensure the storage stability thereof; unreactive materials may be formulated into either or both of the two components.

Suitable classes of solubilizer include: polyphosphazenes; polymethylenesulfides; polyoxyalkylene glycols; polyethylene imines; silicone surfactants, such as polyalkylsiloxane and polyoxyalkylene modified polydimethylsiloxanes including but not limited to poly(C₂-C₃)oxyalkylene modified polydimethylsiloxanes; polpolyhydric alcohols; and, sugars. For completeness, fluorinated silicone surfactants, such as fluorinated polysilanes, are intended to be encompassed within the term silicone surfactants.

Polyhydric alcohols and sugars having utility as solubilizers and which may be used alone or in combination, include, but are not limited to: ethylene glycol, 1,3-propanediol, cyclohexandiol, hydroquinone, catechol, resorcinol, phloroglucinol, pyrogallol, hydroxyhydroquinone, tris(hydroxymethyl)benzene, tris(hydroxymethyl)benzene with three methyl or ethyl substituents bonded to the remaining benzene carbon atoms, isosorbide, isomannide, isoidide, glycerol, cyclohexane-1,2,4-triol, 1,3,5-cyclohexanetriol, pentane-1,2,3-triol, hexane-1,3,5-triol, erythritol, 1,2,4,5-tetrahydroxybenzene, threitol, arabitol, xylitol, ribitol, mannitol, sorbitol, inositol, fructose, glucose, mannose, lactose, 1,1,1-tris(hydroxymethyl)propane, 1,1,1-tris(hydroxymethyl)ethane, di(trimethylolpropane), trimethylolpropane ethoxylate, 2-hydroxymethyl-1,3-propanediol, pentaerythritol allyl ether and pentaerythritol.

Of the polyoxyalkylene glycols, a particular preference for the use of polyoxy(C₂-C₃)alkylene glycols having a weight average molecular weight of from 200 to 10000 g/mol, for example 200 to 2000 g/mol, may be noted.

The presence of tougheners in the curable composition can, in certain circumstances, be advantageous to the debonding of the obtained cured adhesive. Without intention to be bound by theory, tougheners can facilitate phase separation within the cured adhesive under the application of electrical potential. In an exemplary embodiment, the adhesive of the present invention might thus comprise from 0.1 to 10 wt.%, based on the weight of the composition, of a polybutadiene based toughener. Exemplary commercial polybutadiene based tougheners include Poly bd^{®} R20 LM and Poly bd^{®} 15 HT available from Cray Valley.

The curable composition of the present disclosure may comprise a rheology control agent. Said rheology control agent should preferably comprise or consist of: electrically non-conductive fillers; electrically conductive fillers; or, mixtures thereof.

Broadly, there is no particular intention to limit the shape of the particles employed as non-conductive fillers: particles that are acicular, spherical, ellipsoidal, cylindrical, bead-like, cubic or platelet-like may be used alone or in combination. Moreover, it is envisaged that agglomerates of more than one particle type may be used. Equally, there is no particular intention to limit the size of the particles employed as non-conductive fillers. However, such non-conductive fillers will conventionally have an average volume particle size, as measured by laser diffraction / scattering methods, of from 0.1 to 1500 µm, for example from 1 to 1250 µm.

Exemplary non-conductive fillers include but are not limited to calcium carbonate, calcium oxide, calcium hydroxide (lime powder), precipitated and/or pyrogenic silica, zeolites, bentonites, wollastonite, magnesium carbonate, diatomite, barium sulfate, alumina, clay, talc, titanium oxide, iron oxide, zinc oxide, sand, quartz, flint, mica, glass beads, glass powder, and other ground mineral substances. Organic fillers can also be used, in particular wood fibers, wood flour, sawdust, cellulose, cotton, pulp, cotton, wood chips, chopped straw, chaff, ground walnut shells, and other chopped fibers. Short fibers such as glass fibers, glass filament, polyacrylonitrile, carbon fibers, Kevlar fibers, or polyethylene fibers can also be added.

When present, pyrogenic and/or precipitated silica should desirably have a BET surface area of from 10 to 90 m²/g: when such silicas are used, they do not cause any additional increase in the viscosity of the applied composition, but do contribute to strengthening the cured adhesive obtained therefrom. It is likewise conceivable to use pyrogenic and/or precipitated silica having a higher BET surface area, advantageously from 100 to 250 m²/g as a filler: because of the greater BET surface area, the effect of strengthening the cured composition is achieved with a smaller proportion by weight of silica.

Also suitable as non-conductive fillers are hollow spheres having a mineral shell or a plastic shell. These can be, for example, hollow glass spheres that are obtainable commercially under the trade names Glass Bubbles^{®}. Plastic-based hollow spheres, such as Expancel^{®} or Dualite^{®}, may be used and are described in EP 0 520 426 B1: they are made up of inorganic or organic substances and each have a diameter of 1 mm or less, preferably 500 µm or less.

Non-conductive fillers which impart thixotropy to the composition from which the adhesive is cast may be preferred for many applications: such fillers are also described as rheological adjuvants, e.g. hydrogenated castor oil, fatty acid amides, or swellable plastics such as PVC.

There is equally no particular intention to limit the shape of the particles which may be employed as conductive fillers: particles that are acicular, spherical, ellipsoidal, cylindrical, bead-like, cubic or platelet-like may be used alone or in combination. Moreover, it is envisaged that agglomerates of more than one particle type may be used. Moreover, there is no particular intention to limit the size of the particles employed as conductive fillers. However, such conductive fillers will conventionally have a median particle size by volume (Dv50), as measured by laser diffraction / scattering methods, of from 0.1 to 1500 µm, for example from 1 to 1250 µm.

Exemplary conductive particulate fillers include, but are not limited to: silver; copper; gold; palladium; platinum; nickel; gold or silver-coated nickel; carbon black; carbon fiber; carbon nanostructures; graphite; aluminum; indium tin oxide; silver coated copper; silver coated aluminum; metallic coated glass spheres; metallic coated filler; metallic coated polymers; silver coated fiber; silver coated spheres; antimony doped tin oxide; conductive nanospheres; nano silver; nano aluminum; nano copper; nano nickel; and, mixtures thereof. The use of particulate silver and / or carbon black as the conductive filler is preferred.

The desired viscosity of the curable composition may be determinative of the total amount of rheology control agent used. Having regard to that consideration, the total amount of rheology control agent present should not prevent the composition from being readily applicable by the elected method of application of the composition. For example, compositions which are intended to be extrudable from a suitable dispensing apparatus, such as a tube, should possess a viscosity of from 1000 to 150,000, preferably from 10,000 to 100,000 mPas.

In an alternative expression, which is not intended to be mutually exclusive of that given immediately above, the rheology control agent is desirably present in the curable composition in an amount of from 5 to 50 wt.%, preferably from 5 to 45 wt.%, based on the total weight of the composition.

The addition of certain additives may promote the adhesion of the curable composition - and the cured adhesive obtained therefrom - to particular substrates. In this regard, the curable composition may comprise from 0 to 5 wt.%, for example from 0.5 to 5 wt.% based on the weight of the composition, of at least one adhesion promoter.

In certain embodiments, the adhesion promoter may be selected from the group consisting of: morin(2-(2,4-dihydroxy phenyl)-3,5,7-trihydroxy-4H-1-cumarone-4-ketone); 3,7-dihydroxy-2-naphthoic acid (3,7-dihydroxy naphthlene-2-carboxylic acid); pyrogallol carboxylic acid (2,3,4-trihydroxybenzoic acid); 3,4-dihydroxy-benzene guanidine-acetic acid; gallic acid (3,4,5-trihydroxybenzoic acid); para-aminosalicylic acid (4-amino-2-hydroxybenzoic acid, PAS); flutter acid (4,4'-methylene-bis(3-hydroxy-2-naphthoic acid)); citric acid (2-hydroxypropane-1,2,3-tricarboxylic acid); and, mixtures thereof. Of these compounds a preference for the use - alone or in combination - of citric acid, gallic acid and, in particular, para-aminosalicylic acid (PAS) may be mentioned.

As alternative adhesion promoters there may be mentioned: (meth)acrylic acid; Ebecryl 168, methacrylated acidic adhesion promoter commercially available from Radcure Corporation; Esstech PL-2152, methacrylate based adhesion promoter, available from Esstech; Ebecryl 170, acrylated acidic adhesion promoter commercially available from Radcure Corporation; β-carboxyacrytate; Sartomer CN 704, acrylated polyester adhesion promoter available from Sartomer Corporation; and, CD9050, monofunctional acid ester CD 9052, available from Sartomer Corporation; CD 9052, trifunctional acid ester commercially available from Sartomer Corporation; 2-(methacryloyloxy)ethyl succinate (HEMA succinate); and, zinc diacrylate.

A *"plasticizer"* for the purposes of this disclosure is a substance that decreases the viscosity of the curable composition and thus facilitates its processability. Herein the plasticizer may constitute up to 10 wt.% or up to 5 wt.%, based on the total weight of the composition, and is preferably selected from the group consisting of: diurethanes; ethers of monofunctional, linear or branched C4-C16 alcohols, such as Cetiol OE (obtainable from BASF); esters of abietic acid, butyric acid, thiobutyric acid, acetic acid, propionic acid esters and citric acid; esters based on nitrocellulose and polyvinyl acetate; fatty acid esters; dicarboxylic acid esters; esters of OH-group-carrying or epoxidized fatty acids; glycolic acid esters; benzoic acid esters; phosphoric acid esters; sulfonic acid esters; trimellitic acid esters; polyether plasticizers, such as end-capped polyethylene or polypropylene glycols; polystyrene; hydrocarbon plasticizers; chlorinated paraffin; and, mixtures thereof. It is noted that, in principle, phthalic acid esters can be used as the plasticizer but these are not preferred due to their toxicological potential.

"*Stabilizers*" for purposes of this disclosure are to be understood as antioxidants, UV stabilizers, thermal stabilizers or hydrolysis stabilizers. Herein stabilizers may constitute *in toto* up to 5 wt.% or up to 1 wt.%, based on the total weight of the curable composition. Standard commercial examples of stabilizers suitable for use herein include: sterically hindered phenols; thioethers; benzotriazoles; benzophenones; benzoates; cyanoacrylates; acrylates; amines of the hindered amine light stabilizer (HALS) type; phosphorus; sulfur; and, mixtures thereof.

Dependent upon the polymer resin (C^{R}) present, stabilizers may be employed to control, inhibit or prevent premature activation of a free radical initiator: they might, for instance, inhibit or prevent (hydro)peroxide decomposition. Exemplary stabilizers having this functionality include hydroquinones, benzoquinones, naphthoquinones, phenanthroquinones, anthraquinones and substituted compounds thereof. Various phenols may also be used as stabilizers, such as 2,6-di-t-butyl-4-methyl phenol.

In order to enhance shelf life even further, it is often advisable to further stabilize the curable compositions of the present disclosure with respect to moisture penetration through using dessicants. Examples of suitable desiccants or moisture scavengers include, but are not limited to: silica gel; anhydrous calcium sulfate (anhydrite); calcium sulfate dihydrate (gypsum); calcium oxide; montmorillonite clay; molecular sieves such as those including natural or synthetic zeolite; and, activated alumina.

Waxes having utility in the present disclosure should have a softening point of from 50 to 150°C and may include one or more of: polyethylene having a number average molecular weight (Mn) from 500 to 7500; petroleum waxes, such as paraffin wax and microcrystalline wax; synthetic waxes made by polymerizing carbon monoxide and hydrogen, such as Fischer-Tropsch wax; polyolefin waxes including functionalized polyolefin waxes of which maleated polyethylene, maleated polypropylene and maleated poly(ethylene-co-propylene) may be mentioned as examples; and, hydrogenated animal, fish or vegetable oils.

A need also occasionally exists to lower the viscosity of the curable composition according to the present disclosure for specific applications, by using reactive diluent(s). The total amount of reactive diluents present will typically be from 0 to 10 wt.%, for example from 0 to 5 wt.%, based on the total weight of the composition.

The presence of solvents and non-reactive diluents in the curable compositions is also not precluded where this can usefully moderate the viscosities thereof. For instance, but for illustration only, the compositions may contain one or more of: alkyl acetate solvents such as ethyl acetate, n-propyl acetate, butyl acetate, n-butyl acetate, propylene glycol monomethyl ether acetate and methoxypropyl acetate (MPA); alkyl propionate solvents such as n-butyl propionate and n-pentyl propionate; dibasic esters such as dimethyl succinate, dimethyl glutarate, dimethyl adipate; (di)alkyl carbonate solvents such as ethylene carbonate, propylene carbonate (PC), dimethyl carbonate (DMC), ethyl methyl carbonate (EMC) and diethyl carbonate (DEC); ethers such as tetrahydrofuran, dioxane and dimethoxyethane; glycol ether solvents such as ethylene glycol dimethyl ether, ethylene glycol diethyl ether, ethylene glycol dibutyl ether, ethylene glycol diphenyl ether, diethylene glycol, diethylene glycol-monomethyl ether, diethylene glycol-monoethyl ether, diethylene glycol-mono-n-butyl ether, diethylene glycol dimethyl ether, diethylene glycol diethyl ether, diethylene glycoldi-n-butylyl ether, propylene glycol butyl ether, propylene glycol phenyl ether, dipropylene glycol, dipropylene glycol monomethyl ether, dipropylene glycol dimethyl ether and dipropylene glycoldi-n-butyl ether; amide solvents dimethyl acetamide and N-methylpyrrolidone; ketone solvents such as acetone, diisobutyl ketone, isobutyl heptyl ketone, isophorone, methyl ethyl ketone, methyl n-amyl ketone and methyl isobutyl ketone; toluene; xylene; diphenylmethane; diisopropylnaphthalene; petroleum fractions such as Solvesso^{®} products (available from Exxon); and, chlorohydrocarbon solvents such as 4-chlorotrifluoromethylbenzene and 3,4-bis(dichloro)trifluoromethylbenzene.

The above aside, it is preferred that solvents and non-reactive diluents constitute *in toto* less than 15 wt.%, in particular less than 10 wt.%, based on the total weight of the composition.

### Curable Resins

Illustrative cured resinous matrices (M^{R}) having utility in the electrochemically debondable adhesive layer (7) of the present disclosure may be obtained from by the curing of: thermoplastic synthetic resins, such as polyolefin resins, EVA (ethylene-vinyl acetate copolymer) resins, vinyl acetate resins, vinyl acetate copolymers, ionomer resins, acrylic resins, acrylic copolymers, cyanoacrylate resins, vinyl chloride resins, polyvinyl acetal resins, polyurethane resins, polyester resins and polyamide resins; thermosetting synthetic resins such as acrylic resins, acrylic-epoxy hybrid resins, maleimide resins, urea resins, melamine resins, phenolic resins, epoxy resins, epoxy-phenolic hybrid resins, polyurethane resins, urethane prepolymers, polyurethane-epoxy hybrid resins, polyester resins and diallyl phthalate resins; and, moisture-curing resins such as urethane prepolymers and modified silicone resins.

For completeness, urethane prepolymers are reaction products obtained by reacting a polyol with a polyisocyanate compound such that there is a stoichiometric excess of isocyanate (NCO) groups with respect to hydroxyl (OH) groups). Further, exemplary modified silicone resins include polymers having (C₂-C₆)alkylene oxide monomer units on the main chain and having at least one hydrolyzable silicon-containing group per molecule.

It is preferred that the cured resinous matrices (M^{R}) of the electrochemically debondable adhesive layer (7) are obtained from by the curing of: epoxy resins; acrylic resins; polyurethane resins; acrylic-epoxy hybrid epoxy resins; polyurethane-epoxy hybrid resins; and, mixtures thereof. More particularly, it is preferred that the adhesive layer (7) comprises a cured resinous matrix (M^{R}) obtained from epoxy resins.

### Formation of the Curable Compositions

As is known in the art, to form one part (1K) curable compositions, the elements of the composition are brought together and homogeneously mixed under conditions which inhibit or prevent the reactive components from reacting: as would be readily comprehended by the skilled artisan, this might include mixing conditions which limit or prevent exposure to irradiation or which limit or prevent the activation of a constituent latent catalyst. As such, it will often be preferred that the curative elements are not mixed by hand but are instead mixed by machine - a static or dynamic mixer, for example - in pre-determined amounts under anhydrous conditions without intentional photo-irradiation.

To form two component (2K) curable compositions, the reactive components are brought together and mixed in such a manner as to induce the hardening thereof: the first and second components of the composition will conventionally be mixed in amounts by weight which achieve the desired ratio of reactive groups, for instance the desired ratio of epoxide groups to epoxide reactive groups atoms. The reactive compounds should be mixed under sufficient shear forces to yield a homogeneous mixture. Thorough and effective mixing can also be determinative of a homogeneous distribution of the charged species within the polymer matrix obtained following curing and thereby of the provision of sufficient ionic conductivity to support an electrochemical reaction at the interface with the electrically conductive surface. It is considered that this can be achieved without special conditions or special equipment. That said, suitable mixing devices might include: static mixing devices; magnetic stir bar apparatuses; wire whisk devices; augers; batch mixers; planetary mixers; C.W. Brabender or Banburry^{®} style mixers; and, high shear mixers, such as blade-style blenders and rotary impellers.

For small-scale applications in which volumes of less than 2 liters will generally be used, the preferred packaging for the two components (2K) compositions will be side-by-side double cartridges or coaxial cartridges, in which two tubular chambers - typically of equal volume - are arranged alongside one another or inside one another and are sealed with pistons: the driving of these pistons allows the parts to be extruded from the cartridge, advantageously through a closely mounted static or dynamic mixer. For larger volume applications, the two components of the composition may advantageously be stored in drums or pails: in this case the two components are extruded via hydraulic presses, in particular by way of follower plates, and are supplied via pipelines to a mixing apparatus which can ensure fine and highly homogeneous mixing of the two components. In any event, for any package, it is important that the components be disposed with an airtight and moisture-tight seal, so that both components can be stored for a long time, ideally for 12 months or longer.

Non-limiting examples of two component dispensing apparatuses and methods that may be suitable for the present invention include those described in U.S. Patent No. 6,129,244 and US Patent No. 8,313,006.

Where applicable, the curable compositions should broadly be formulated to exhibit an initial viscosity - determined immediately after mixing, for example, up to two minutes after mixing of the constituents - of less than 200000 mPa·s, for instance less than 100000 mPa.s, at 25°C. Independently of or additional to said viscosity characteristics, the curable compositions should be formulated to be bubble (*foam*) free upon mixing and upon subsequent curing.

The so-obtained curable compositions may be then be further processed - according to, for example, Method (I) and Method (II) described above - to provide the electrochemically debondable adhesive layer (7).

### EXEMPLARY CURABLE COMPOSITION

In an exemplary embodiment, the electrochemically debondable adhesive layer (7) is obtained from a curable two component (2K) composition based on at least one epoxide compound. More particularly, in this context, the present disclosure provides a curable two-component (2K) composition comprising:
a first component comprising:
   a) said non-polymerizable electrolyte, examples of which are as described hereinabove; and,
   b) at least one epoxide compound; and,
a second component comprising:
   c) at least one compound which provides at least one epoxide-reactive group; and,
   d) an accelerator,
wherein the two component (2K) composition further comprises:
   e) a rheology control agent comprising electrically non-conductive fillers, electrically conductive fillers or mixtures thereof
further wherein the composition is characterized by a molar ratio of epoxide-reactive groups to epoxide groups from 0.6:1 to 1.2: 1, for example from 0.9: 1 to 1.1: 1. For surety, the rheology control agent may be disposed in the first component, the second component or both of said first and second components of the composition.

In important embodiments of the invention, the two-component (2K) composition comprises, based on the weight of the composition:
from 0.5 to 15 wt.%, preferably 0.5 to 10 wt.% of a) said non-polymerizable electrolyte;
from 20 to 70 wt.%, preferably 20 to 60 wt.% of b) said at least one epoxide compound;
from 0.1 to 25 wt.%, preferably from 1 to 25 wt.%, of c) said at least one compound which provides at least one epoxide-reactive group;
from 0 to 15 wt.%, preferably from 0.1 to 10 wt.% of d) said accelerator; and,
from 10 to 60 wt.%, preferably from 15 to 60 wt.% of e) said rheology control agent,
wherein the two-component (2K) composition is characterized by a molar ratio of epoxide-reactive groups to epoxide groups from 0.6:1 to 1.2: 1, for example from 0.9: 1 to 1.1: 1.

Notably, the molar ratio of epoxide-reactive groups to epoxide groups of 1:1 is included within the above mentioned stated ranges. For surety the term epoxide-reactive groups includes latent reactive groups which are therefore included in the molar ratio term.

### b) Epoxide Compounds

Epoxide compounds as used herein may include mono-functional epoxide compounds, multi- or polyfunctional epoxide compounds, and combinations thereof. Constituent b) of the two component (2K) composition may be constituted by a single epoxide compound but equally may be mixtures of epoxide functional compounds, including mixtures of compounds having different numbers of epoxide groups per molecule. An epoxide compound may be saturated or unsaturated, aliphatic, cycloaliphatic, aromatic or heterocyclic and may be substituted. Further, the epoxide compound may also be monomeric or polymeric.

Illustrative monoepoxide compounds include: alkylene oxides; epoxy-substituted cycloaliphatic hydrocarbons, such as cyclohexene oxide, vinylcyclohexene monoxide, (+)-cis-limonene oxide, (+)-cis,trans-limonene oxide, (-)-cis,trans-limonene oxide, cyclooctene oxide, cyclododecene oxide and α-pinene oxide; epoxy-substituted aromatic hydrocarbons; monoepoxy substituted alkyl ethers of monohydric alcohols or phenols, such as the glycidyl ethers of aliphatic, cycloaliphatic and aromatic alcohols; monoepoxy-substituted alkyl esters of monocarboxylic acids, such as glycidyl esters of aliphatic, cycloaliphatic and aromatic monocarboxylic acids; monoepoxy-substituted alkyl esters of polycarboxylic acids wherein the other carboxy group(s) are esterified with alkanols; alkyl and alkenyl esters of epoxy-substituted monocarboxylic acids; epoxyalkyl ethers of polyhydric alcohols wherein the other OH group(s) are esterified or etherified with carboxylic acids or alcohols; and, monoesters of polyhydric alcohols and epoxy monocarboxylic acids, wherein the other OH group(s) are esterified or etherified with carboxylic acids or alcohols.

By way of example, the following glycidyl ethers might be mentioned as being particularly suitable monoepoxide compounds for use herein: methyl glycidyl ether; ethyl glycidyl ether; propyl glycidyl ether; butyl glycidyl ether; pentyl glycidyl ether; hexyl glycidyl ether; cyclohexyl glycidyl ether; octyl glycidyl ether; 2-ethylhexyl glycidyl ether; allyl glycidyl ether; benzyl glycidyl ether; phenyl glycidyl ether; 4-tert-butylphenyl glycidyl ether; 1-naphthyl glycidyl ether; 2-naphthyl glycidyl ether; 2-chlorophenyl glycidyl ether; 4-chlorophenyl glycidyl ether; 4-bromophenyl glycidyl ether; 2,4,6-trichlorophenyl glycidyl ether; 2,4,6-tribromophenyl glycidyl ether; pentafluorophenyl glycidyl ether; o-cresyl glycidyl ether; m-cresyl glycidyl ether; and, p-cresyl glycidyl ether.

In an embodiment, the monoepoxide compound conforms to Formula (E) herein below: 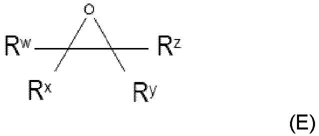 wherein: R^{w}, R^{x}, R^{y} and R^{z} may be the same or different and are independently selected from hydrogen, halogen, C₁-C₈ alkyl, C₃-C₁₀ cycloalkyl, C₂-C₁₂ alkenyl, C₆-C₁₈ aryl or C₇-C₁₈ aralkyl, with the proviso that at least one of R^{y} and R^{z} is not hydrogen.

It is preferred that R^{w}, R^{x} and R^{y} are hydrogen and R^{z} is either phenyl or C₁-C₈ alkyl and, more preferably, C₁-C₄ alkyl.

Having regard to this embodiment, exemplary monoepoxides include: ethylene oxide; 1,2-propylene oxide (*propylene oxide*); 1,2-butylene oxide; cis-2,3-epoxybutane; trans-2,3-epoxybutane; 1,2-epoxypentane; 1,2-epoxyhexane; 1,2-heptylene oxide; decene oxide; butadiene oxide; isoprene oxide; and, styrene oxide.

In the present disclosure, reference is made to using at least one monoepoxide compound selected from the group consisting of: ethylene oxide; propylene oxide; cyclohexene oxide; (+)-cis-limonene oxide; (+)-cis,trans-limonene oxide; (-)-cis,trans-limonene oxide; cyclooctene oxide; and, cyclododecene oxide.

Again, without intention to limit the present disclosure, suitable polyepoxide compounds may be liquid, solid or in solution in solvent. Further, such polyepoxide compounds should have an epoxide equivalent weight of from 100 to 700 g/eq, for example from 120 to 320 g/eq. And generally, diepoxide compounds having epoxide equivalent weights of less than 500 g/eq. or even less than 400 g/eq. are preferred: this is predominantly from a costs standpoint, as in their production, lower molecular weight epoxy resins require more limited processing in purification.

As examples of types or groups of polyepoxide compounds which may be polymerized in present disclosure, mention may be made of: glycidyl ethers of polyhydric alcohols and polyhydric phenols; glycidyl esters of polycarboxylic acids; and, epoxidized polyethylenically unsaturated hydrocarbons, esters, ethers and amides.

Suitable diglycidyl ether compounds may be aromatic, aliphatic or cycloaliphatic in nature and, as such, can be derivable from dihydric phenols and dihydric alcohols. And useful classes of such diglycidyl ethers are: diglycidyl ethers of aliphatic and cycloaliphatic diols, such as 1,2-ethanediol, 1,4-butanediol, 1,6-hexanediol, 1,8-octanediol, 1,12-dodecanediol, cyclopentane diol and cyclohexane diol; bisphenol A based diglycidylethers; bisphenol F diglycidyl ethers; diglycidyl o-phthalate, diglycidyl isophthalate and diglycidyl terephthalate; polyalkyleneglycol based diglycidyl ethers, in particular polypropyleneglycol diglycidyl ethers; and, polycarbonatediol based glycidyl ethers. Other suitable diepoxides which might also be mentioned include: diepoxides of double unsaturated fatty acid C₁-C₁₈ alkyl esters; butadiene diepoxide; polybutadiene diglycidyl ether; vinylcyclohexene diepoxide; and, limonene diepoxide.

Further illustrative polyepoxide compounds include but are not limited to: glycerol polyglycidyl ether; trimethylolpropane polyglycidyl ether; pentaerythritol polyglycidyl ether; diglycerol polyglycidyl ether; polyglycerol polyglycidyl ether; and, sorbitol polyglycidyl ether.

And examples of highly preferred polyepoxide compounds include: bisphenol-A epoxy resins, such as DER^{™} 331, DER^{™} 330, DER^{™} 337 and DER^{™} 383; bisphenol-F epoxy resins, such as DER^{™} 354; bisphenol-A/F epoxy resin blends, such as DER^{™} 353; aliphatic glycidyl ethers, such as DER^{™} 736; polypropylene glycol diglycidyl ethers, such as DER^{™} 732; solid bisphenol-A epoxy resins, such as DER^{™} 661 and DER^{™} 664 UE; solutions of bisphenol-A solid epoxy resins, such as DER^{™} 671-X75; epoxy novolac resins, such as DEN^{™} 438; brominated epoxy resins such as DER^{™} 542; castor oil triglycidyl ether, such as ERISYS^{™} GE-35H; polyglycerol-3-polyglycidyl ether, such as ERISYS^{™} GE-38; and, sorbitol glycidyl ether, such as ERISYS^{™} GE-60.

Independently of or additional to any embodiments mentioned above, constituent b) of the composition can, in certain embodiments, comprise epoxide-functional alkoxy silanes having the formula (ES):

E-(CH₂)ₙ-Si(R^{s})ₘ(OR^{t})₃₋ₘ (ES)

wherein:
E is 2,3-epoxypropoxy, epoxycyclohexyl or epoxycyclopentyl;
n is from 1-10;
m is 0, 1 or 2;
each R^{s} is independently C₁-C₃ alkyl; and,
each R^{t} is independently C₁-C₃ alkyl.

In preferred compounds of Formula (ES): E is 2,3-epoxypropoxy; n is from 1 to 8; m is 0 or 1; R^{s}, when present, is methyl or ethyl; and, each R^{t} is independently methyl or ethyl.

Exemplary silanes, which may be used alone or in combination, include but are not limited to: 2-(3,4-epoxycyclohexyl)ethyltrimethoxysilane; 3-glycidoxypropyl methyldimethoxysilane; γ-glycidoxy propyl trimethoxy silane; γ-glycidoxy ethyl trimethoxy silane; γ-glycidoxymethyl trimethoxy silane; γ-glycidoxy methyl triethoxy silane; 3-glycidoxypropyl methyldiethoxysilane; γ-glycidoxy ethyl triethoxy silane; γ-glycidoxy propyl triethoxy silane; and, 8-glycidooxyoctyl trimethoxysilane. The use of γ-glycidoxy propyl trimethoxy silane may be mentioned in particular.

When present, the epoxide functional alkoxysilanes should constitute less than 20 wt.%, preferably less than 15 wt.% or less than 10 wt.%, based on the total weight of epoxide functional compounds in the composition.

The present disclosure also does not preclude the curable one component (1K) compositions from further comprising one or more cyclic monomers selected from the group consisting of: oxetanes; cyclic carbonates; cyclic anhydrides; and, lactones. The disclosures of the following citations may be instructive in disclosing suitable cyclic carbonate functional compounds: US Patent No. 3,535,342; US Patent No. 4,835,289; US Patent No. 4,892,954; UK Patent No. GB-A-1,485,925; and, EP-A-0 119 840. However, such cyclic co-monomers should constitute less than 20 wt.%, preferably less than 10 wt.% or less than 5 wt.%, based on the total weight of epoxide functional compounds in the composition.

### c) Curative for the Epoxide Compound

The curing agent for the epoxide compounds, disposed in the second component of this exemplary two component (2K) composition, comprises or consists of c) at least one compound which provides at least one epoxide-reactive group. Each curative compound may either possess at least one epoxide-reactive group or, in the case of latent curative compounds, possess a functional group which yields an epoxide-reactive group upon exposure to a triggering condition, such as heat or irradiation. Constituent c) may, in certain circumstances, be constituted by a combination of reactive and latent curatives.

The above aside, constituent c) should be present in the composition in an amount which is sufficient to effect the complete cure of the epoxide compound(s). When formulating two-component (2K) composition, the composition is desirably characterized by a molar ratio of epoxide groups to epoxide-reactive groups (E^{R}) of from 0.6:1 to 1.2:1, for example from 0.9:1 to 1.1:1. The term epoxide-reactive groups includes latent reactive groups.

In an alternative expression, which is not intended to be mutually exclusive of that given above, it is preferred that the two component (2K) composition comprises, based on the weight of the composition, from 0.1 to 25 wt.% of c) said at least one compound which provides at least one epoxide-reactive group. Preferably said composition comprises from 1 to 25 wt.%, for example from 5 to 25 wt.% of c) said at least one compound which provides at least one epoxide-reactive group.

Reactive curing agents may, in particular, include one or more of: i) at least one polyamine having at least two amine hydrogens reactive toward epoxide groups; ii) at least one mercapto compound having at least two mercapto groups reactive toward epoxide groups; and, iii) at least one Mannich base.

The at least one polyamine having at least two amine hydrogens reactive toward epoxide groups should, in particular, contain primary and / or secondary amine groups and have an equivalent weight per primary or secondary amine group of not more than 150 g/eq., more preferably not more than 125 g/eq.

Suitable polyamines, which may be used alone or in combination, include but are not limited to the following:
i) Aliphatic, cycloaliphatic or arylaliphatic primary diamines of which the following examples may be mentioned: 2,2-dimethyl-1,3-propanediamine; 1,3-pentanediamine (DAMP); 1,5-pentanediamine; 1,5-diamino-2-methylpentane (MPMD); 2-butyl-2-ethyl-1,5-pentanediamine (C11-neodiamine); 1,6-hexanediamine (hexamethylenediamine, HMDA); 2,5-dimethyl-1,6-hexanediamine; 2,2,4- and / or 2,4,4-trimethylhexamethylenediamine; 1,7-heptanediamine; 1,8-octanediamine; 1,9-nonanediamine; 1,10-decanediamine; 1,11-undecanediamine; 1,12-dodecanediamine; 1,2-, 1,3- and 1,4-diaminocyclohexane; bis(4-aminocyclohexyl)methane; bis(4-amino-3-methylcyclohexyl)methane; bis(4-amino-3-ethylcyclohexyl)methane; bis(4-amino-3,5-dimethylcyclohexyl)methane; bis(4-amino-3-ethyl-5-methylcyclohexyl)methane; 1-amino-3-aminomethyl-3,5,5-trimethylcyclohexane (isophorone diamine, IPDA); 2- and / or 4-methyl-1,3-diaminocyclohexane; 1,3-bis(aminomethyl)-cyclohexane; 1,4-bis(aminomethyl)cyclohexane; 2,5(2,6)-bis(aminomethyl)-bicyclo[2.2.1]heptane (norborane diamine, NBDA); 3(4),8(9)-bis(aminomethyl)tricyclo[5.2.1.0^{2,6}]-decane (TCD-diamine); 1,4-diamino-2,2,6-trimethylcyclohexane (TMCDA); 1,8-menthanediamine; 3,9-bis(3-aminopropyl)-2,4,8,10-tetraoxaspiro[5.5]undecane; and, 1,3-bis(aminomethyl)benzene (MXDA).
ii) Tertiary amine group-containing polyamines with two or three primary aliphatic amine groups of which the following specific examples may be mentioned: N,N'-bis(aminopropyl)-piperazine; N,N-bis(3-aminopropyl)methylamine; N,N-bis(3-aminopropyl)ethylamine; N,N-bis(3-aminopropyl)propylamine; N,N-bis(3-aminopropyl)cyclohexylamine; N,N-bis(3-aminopropyl)-2-ethyl-hexylamine; tris(2-aminoethyl)amine; tris(2-aminopropyl)amine; tris(3-aminopropyl)amine; and, the products from the double cyanoethylation and subsequent reduction of fatty amines derived from natural fatty acids, such as N,N-bis(3-aminopropyl)dodecylamine and N,N-bis(3-aminopropyl)tallow alkylamine, commercially available as Triameen^{®} Y12D and Triameen^{®} YT (from Akzo Nobel).
iii) Ether group-containing aliphatic primary polyamines of which the following specific examples may be mentioned: bis(2-aminoethyl)ether; 3,6-dioxaoctane-1,8-diamine; 4,7-dioxadecane-1,10-diamine; 4,7-dioxadecane-2,9-diamine; 4,9-dioxadodecane-1,12-diamine; 5,8-dioxadodecane-3,10-diamine; 4,7,10-trioxatridecane-1,13-diamine and higher oligomers of these diamines; bis(3-aminopropyl)polytetrahydrofuranes and other polytetrahydrofuran diamines; cycloaliphatic ether group-containing diamines obtained from the propoxylation and subsequent amination of 1,4-dimethylolcyclohexane, such as that material commercially available as Jeffamine^{®} RFD-270 (from Huntsman); polyoxyalkylenedi- or-triamines obtainable as products from the amination of polyoxyalkylenedi- and -triols and which are commercially available under the name of Jeffamine@ (from Huntsman), under the name of polyetheramine (from BASF) or under the name of PC Amines^{®} (from Nitroil). A particular preference may be noted for the use of Jeffamine^{®} D-230, Jeffamine^{®} D-400, Jeffamine^{®} D-600, Jeffamine^{®} D-2000, Jeffamine@ D-4000, Jeffamine@ T-403, Jeffamine@ T-3000, Jeffamine@ T-5000, Jeffamine@ EDR-104, Jeffamine^{®} EDR-148 and Jeffamine^{®} EDR-176, as well as corresponding amines from BASF or Nitroil.
iv) Primary diamines with secondary amine groups of which the following examples may be mentioned: 3-(2-aminoethyl)aminopropylamine, bis(hexamethylene)triamine (BHMT); diethylenetriamine (DETA); triethylenetetramine (TETA); tetraethylenepentamine (TEPA); pentaethylenehexamine (PEHA); higher homologs of linear polyethyleneamines, such as polyethylene polyamines with 5 to 7 ethyleneamine units (so-called "higher ethylenepolyamine," HEPA); products from the multiple cyanoethylation or cyanobutylation and subsequent hydrogenation of primary di- and polyamines with at least two primary amine groups, such as dipropylenetriamine (DPTA), N-(2-aminoethyl)-1,3-propanediamine (N3-amine), N,N'-bis(3-aminopropyl)ethylenediamine (N4-amine), N,N'-bis(3-aminopropyl)-1,4-diaminobutane, N5-(3-aminopropyl)-2-methyl-1,5-pentanediamine, N3-(3-aminopentyl)-1,3-pentanediamine, N5-(3-amino-1-ethylpropyl)-2-methyl-1,5-pentanediamine or N,N'-bis(3-amino-1-ethylpropyl)-2-methyl-1,5-pentanediamine.
v) Polyamines with one primary and at least one secondary amino group of which the following examples may be mentioned: N-butyl-1,2-ethanediamine; N-hexyl-1,2-ethanediamine; N-(2-ethylhexyl)-1,2-ethanediamine; N-cyclohexyl-1,2-ethanediamine; 4-aminomethyl-piperidine; N-(2-aminoethyl)piperazine; N-methyl-1,3-propanediamine; N-butyl-1,3-propanediamine; N-(2-ethylhexyl)-1,3-propanediamine; N-cyclohexyl-1,3-propanediamine; 3-methylamino-1-pentylamine; 3-ethylamino-1-pentylamine; 3-cyclohexylamino-1-pentylamine; fatty diamines such as N-cocoalkyl-1,3-propanediamine; products from the Michael-type addition reaction of primary aliphatic diamines with acrylonitrile, maleic or fumaric acid diesters, citraconic acid diesters, acrylic and methacrylic acid esters, acrylic and methacrylic acid amides and itaconic acid diesters, reacted in a 1:1 molar ratio; products from the partial reductive alkylation of primary polyamines with aldehydes or ketones, especially N-monoalkylation products of the previously mentioned polyamines with two primary amine groups and in particular of 1,6-hexanediamine, 1,5-diamino-2-methylpentane, 1,3-bis(aminomethyl)cyclohexane, 1,4-bis(aminomethyl)cyclohexane, 1,3-bis(aminomethyl)benzene, BHMT, DETA, TETA, TEPA, DPTA, N3-amine and N4-amine, wherein preferred alkyl groups are benzyl, isobutyl, hexyl and 2-ethylhexyl; and, partially styrenated polyamines such as those commercially available as Gaskamine^{®} 240 (from Mitsubishi Gas Chemical).
vi) Secondary diamines and, in particular, N,N'-dialkylation products of the previously mentioned polyamines with two primary amine groups, especially N,N'-dialkylation products of 1,6-hexanediamine, 1,5-diamino-2-methylpentane, 1,3-bis(aminomethyl)cyclohexane, 1,4-bis(aminomethyl)-cyclohexane, 1,3-bis(aminomethyl)benzene, BHMT, DETA, TETA, TEPA, DPTA, N3-amine or N4-amine, wherein preferred alkyl groups are 2-phenylethyl, benzyl, isobutyl, hexyl and 2-ethylhexyl.
vii) Aromatic polyamines of which mention may be made of: m- and p-phenylenediamine; 4,4'-, 2,4' and 2,2'-diaminodiphenylmethane; 3,3'-dichloro-4,4'-diaminodiphenylmethane (MOCA); 2,4- and 2,6-tolylenediamine; mixtures of 3,5-dimethylthio-2,4- and -2,6-tolylenediamine (available as Ethacure^{®} 300 from Albermarle); mixtures of 3,5-diethyl-2,4- and -2,6-tolylene diamine (DETDA); 3,3',5,5'-tetraethyl-4,4'-diaminodiphenylmethane (M-DEA); 3,3',5,5'-tetraethyl-2,2'-dichloro-4,4'-diaminodiphenylmethane (M-CDEA); 3,3'-diisopropyl-5,5'-dimethyl-4,4'-diaminodiphenylmethane (M-MIPA); 3,3',5,5'-tetraisopropyl-4,4'-diaminodiphenylmethane (M-DIPA); 4,4'-diamino diphenyl-sulfone (DDS); 4-amino-N-(4-aminophenyl)benzenesulfonamide; 5,5'-methylenedianthranilic acid; dimethyl-(5,5'-methylenedianthranilate); 1,3-propylene-bis(4-aminobenzoate); 1,4-butylene-bis(4-aminobenzoate); polytetramethylene oxide-bis(4-aminobenzoate) (available as Versalink^{®} from Air Products); 1,2-bis(2-aminophenylthio)ethane, 2-methylpropyl-(4-chloro-3,5-diaminobenzoate); and, tert.butyl-(4-chloro-3,5-diaminobenzoate).
viii)Polyamidoamines of which indicative members include the reaction products of monohydric or polyhydric carboxylic acids or the esters or anhydrides thereof, - in particular dimer fatty acids - and an aliphatic, cycloaliphatic or aromatic polyamine, for instance polyalkyleneamines such as DETA or TETA. Commercially available polyamidoamines include: Versamid^{®} 100, 125, 140 and 150 (from Cognis); Aradur^{®} 223, 250 and 848 (from Huntsman); Euretek^{®} 3607 and 530 (from Huntsman); and, Beckopox^{®} EH 651, EH 654, EH 655, EH 661 and EH 663 (from Cytec).

Exemplary compounds among the aforementioned polyamines having at least two primary aliphatic amine groups are: isophorone diamine (IPDA); hexamethylene diamine (HMDA); 1,3-bis(aminomethyl)cyclohexane; 1,4-bis(aminomethyl)cyclohexane; bis(4-amino-cyclohexyl)methane; bis(4-amino-3-methylcyclohexyl)methane; NBDA; and, ether group-containing polyamines with a number average molecular weight (Mn) of up to 500 g/mol of which commercial examples include Jeffamine^{®} D-230 and D-600 (available from Huntsman).

As noted above, the constituent c) of the two component (2K) composition may comprise at least one compound which has at least two reactive mercapto-groups per molecule. Suitable mercapto-group containing compounds, which may be used alone or in combination, include but are not limited to the following:
- Mercaptan-terminated polyoxyalkylene ethers, obtainable by reacting polyoxyalkylenedi- and -triols either with epichlorohydrin or with an alkylene oxide, followed by sodium hydrogen sulfide.
- Mercaptan-terminated compounds in the form of polyoxyalkylene derivatives, known under the trade name of Capcure^{®} (from Cognis), in particular the types WR-8, LOF and 3-800 thereof.
- Polyesters of thiocarboxylic acids of which particular examples include: pentaerythritol tetramercapto-acetate (PETMP); trimethylolpropane trimercaptoacetate (TMPMP); glycol dimercaptoacetate; and, the esterification products of polyoxyalkylene diols and triols, ethoxylated trimethylolpropane and polyester diols with thiocarboxylic acids such as thioglycolic acid and 2- or 3-mercaptopropionic acid.
- 2,4,6-trimercapto-1,3,5-triazine, 2,2'-(ethylenedioxy)-diethanethiol (triethylene glycol dimercaptan) and / or ethanedithiol.
- T ris(2-(mercaptopropionyloxy)ethyl)isocyanate.

A preference is acknowledged for the use of polyesters of thiocarboxylic acids and, in particular, for the use of at least one of pentaerythritol tetramercapto-acetate (PETMP), tris-(3-mercaptopropionate) (TMP), trimethylolpropane trimercaptoacetate (TMPMP), tris(2-(mercaptopropionyloxy)ethyl)isocyanate and glycol dimercaptoacetate.

As further noted above, constituent c) may, in certain embodiments, comprise at least one Mannich base. Such compounds may be characterized by containing at least one phenalkamine and, in particular, a phenalkamine obtained from the condensation of cardanol (CAS Number: 37330-39-5), an aldehyde and an amine. The reactant amine in the condensation reaction is desirably ethylenediamine or diethyltriamine.

Mannich bases and phenalkamines are known in the art and suitable examples include the commercially available phenalkamines Cardolite^{®} NC-541, NC-557, NC-558, NC-566, Lite 2001 and Lite 2002 (available from Cardolite), Aradur^{®} 3440, 3441, 3442 and 3460 (available from Huntsman) and Beckopox^{®} EH 614, EH 621, EH 624, EH 628 and EH 629 (available from Cytec).

Any common latent epoxy curing agents used in the art can be used in the present disclosure without special limitations. Exemplary latent curatives which may be used in or as constituent c) of the composition include but are not limited to: ketimines obtainable by the reaction of aliphatic polyamines and ketones; polyethyleneimines, in particular polyethyleneimines having a weight average molecular weight (Mw) from 700 to 1,000,000; imidazole derivatives such as 2-heptadeoylimidazole, 2-phenyl-4,5-dihydroxymethylimidazole, 2-phenyl-4-methyl-5-hydroxymethylimidazole, 2-phenyl-4-benzyl-5-hydroxymethyl-imidazole; 2,4-diamino-8-2-methylimidazolyl-(1)-ethyl-5-triazine; addition products of triazine with isocyanuric acid; hydrazides, such as succinohydrazide, adipohydrazide, isophtholohydrazide o-oxybenzohydrazide and salicylohydrazide.

Still further suitable latent epoxy curing agents which may be used herein are described in: US Patent No. 4,546,155; US Patent No. 7,226,976; US Patent No. 4,833,226; JP2008214567; UK Patent No. GB 1,121,196; WO2014/165423; and, US Patent No. 5,077,376. And examples of commercially available latent epoxy curing agents include Ajicure PN-23, PN-40, PN-H, MY-24 and PN-50 commercially available from Ajinomoto Co., Inc.; EH-4337S, EH-3293S and EH-4357S commercially available from Asahi Denka Co. Ltd.; Novacure HX-3722 and HXA-3921 HP commercially available from Asahi Kasei Kogyo. K.K.; and, Sunmide LH-210, Ancamin 2014AS/FG and Ancamin 2337S commercially available from Air Products and Chemicals, Inc.

In addition to the above, it is envisaged that constituent c) of the composition may comprise or consist of dicyandiamide. When employed, it is preferred that said dicyandiamide is in finely divided form: a median volume particle size (Dv50) of from 0.5 to 100 µm, for example of from 1 to 50 µm or from 2 to 20 µm might be noted as desirable. Said particle size refers to the diameter or largest dimension of a particle in a distribution of particles and is measurable via dynamic light scattering.

### d) Accelerator

The exemplary two component (2K) composition, and more particularly the second component thereof, may comprise d) at least one accelerator, which accelerator is a substance that promotes the reaction between the epoxide groups and the epoxide-reactive groups of the curative, in particular the reaction between the amine and the epoxide groups. A specific example relates to the use of an amine accelerator which functions by de-protonation of reactive thiol (-SH) groups present to thiolate (-S"), which thiolate reacts with epoxide groups by nucleophilic ring opening polymerization.

The composition may preferably comprise, based on the weight of the composition, from 0 to 15 wt.% of d) said at least one accelerator. In certain embodiments, the composition may comprise from 0.1 to 10 wt.%, for example from 0.1 to 5 wt.% of d) said at least one accelerator.

Without intention to the limit the accelerators used in the present disclosure, mention may be made of the following suitable accelerators: i) acids or compounds hydrolyzable to acids, in particular a) organic carboxylic acids, such as acetic acid, benzoic acid, salicylic acid, 2-nitrobenzoic acid and lactic acid; b) organic sulfonic acids, such as methanesulfonic acid, p-toluenesulfonic acid and 4-dodecylbenzenesulfonic acid; c) sulfonic acid esters; d) inorganic acids, such as phosphoric acid; e) Lewis acid compounds, such as BF₃ amine complexes, SbF₆ sulfonium compounds, bis-arene iron complexes; f) Bronsted acid compounds, such as pentafluoroantimonic acid complexes; and, e) mixtures of the aforementioned acids and acid esters; ii) phenols, in particular bisphenols; ii) tertiary amines, such as 2-piperazin-1-ylethanamine, 1,4-diazabicyclo[2.2.2]octane, benzyldimethylamine, α-methylbenzyl dimethylamine, triethanolamine, dimethylamino propylamine and salts of such tertiary amines; iv) imidazoles, including imidazole, 1-methylimidazole, 2-methylimidazole, 2-ethylimidazole, 2-ethyl-4-methylimidazole, 2-undecylimidazole, 2-heptadecylimidazole, 2-phenylimidazole, 2-phenyl-4-methylimidazole, 2-phenyl-4,5-dihydroxymethylimidazole, 2-phenyl-4-methyl-5-hydroxymethylimidazole, 1-cyanoethyl-2-undecylimidazole, 1-cyanoethyl-2-ethyl-4-imidazole, 2-phenylimidazole, 1-benzyl-2-phenylimidazole, benzimidazole, 2-phenyl-4, 5-dihydroxymethylimidazole, and 2, 3-dihydro-1H-pyrrolo [1,2-a] benzimidazole, 1-vinylimidazole and N-(3-aminopropyl)imidazole; v) quaternary ammonium salts, such as benzyltrimethyl ammonium chloride; vi) amidines, such as 1,8-diazabicyclo[5.4.0]undec-7-ene; vii) urea derivatives; viii) thiourea derivatives; ix) guanidines, such as 1,1,3,3-tetramethylguanidine; x) phenol resins; and, xi) phosphites, such as di- and triphenylphosphites.

For surety, it is noted that the constituent d) may comprise an encapsulated imidazole compound, such as an encapsulated form of one of the above mentioned imidazole compounds. The encapsulated imidazole may be in the form of particles have a median volume particle size (Dv50) of from 1 to 50 microns, for example from 1 to 20 microns. The latency provided by the encapsulation may serve to improve the storage stability of the two component (2K) composition. Exemplary commercially available encapsulated imidazole compounds include: HX3941HP, HX A3042HP, HX A3922HP, HX A3792, HX A3748, HX3721, HX3722, HX3088, HX3741, HX3742, HX3713, HX3742, and HX3613 manufactured by Asahi Company; and, Technicure LC80, available from A&C Catalysts Inc.

The skilled artisan will recognize that the selection of an accelerator is not simply concerned with adding the fastest accelerator. Other factors determinative in the selection of accelerators include: cost; toxicity; solubility; processing effects, such as working time, premature gelation, exothermic degradation, expansion and off-gassing; final properties, such as glass transition temperature (T_{g}), modulus, strength, elongation at break and chemical resistance; regulatory concerns; and, ease of use.

In embodiments of the present disclosure, constituent d) comprises or consists of at least one accelerator selected from the group consisting of: tertiary amines; urea derivatives; thiourea derivatives; and, amidines. In particular, the cure accelerator d) may comprise or consist of at least one urea derivative of Formula (V) or Formula (VI): 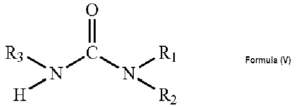 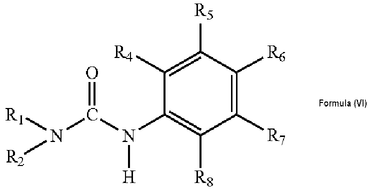
wherein: at least one residue R¹, R², R³ is not hydrogen;
R¹ and R² are independently selected from hydrogen, C₁-C₁₈ alkyl and C₃-C₁₈ cycloalkyl;
R³ is hydrogen, C₁-C₁₈ alkyl, C₃-C₁₈ cycloalkyl, C₆-C₁₈ aryl, C₆-C₁₈ aralkyl, C₆-C₁₈-alkylaryl, C₁-C₁₈ alkyl substituted with -NHC(O)NR¹R², C₃-C₁₈ cycloalkyl substituted with -NHC(O)NR¹R², C₆-C₁₈ aryl substituted with -NHC(O)NR¹R²; C₆-C₁₈ aralkyl substituted with -NHC(O)NR¹R²; and, C₆-C₁₈ aralkyl substituted with -NHC(O)NR¹R²; and,
R⁴, R⁵, R⁶, R⁷ and R⁸ are independently selected from hydrogen, halogen, C₁-C₁₈ alkyl, C₃ to C₁₈ cycloalkyl, C₆-C₁₈ aryl, C₆-C₁₈ aralkyl, C₆-C₁₈-alkylaryl , -CF₃,-NHC(O)NR¹R², C₁-C₁₈ alkyl substituted with -NHC(O)NR¹R², C₃-C₁₈ cycloalkyl substituted with -NHC(O)NR¹R², C₆-C₁₈ aryl substituted with -NHC(O)NR¹R²; C₆-C₁₈ aralkyl substituted with -NHC(O)NR¹R²; and, C₆-C₁₈ aralkyl substituted with -NHC(O)NR¹R².

The substituents (R¹-R⁸) of the urea derivative of Formulae (V) and (VI) should be selected to ensure any said derivative(s) is liquid at room temperature and 1 atmosphere pressure and has a viscosity of less than 1 Pa.s, preferably less than 100 mPa.s at 25°C. Additional to those considerations, it is preferred that the urea derivatives of Formulae (V) and (VI) meet the following conditions:
at least one residue R¹, R², R³ is not hydrogen;
R¹ and R² are independently selected from hydrogen and C₁-C₄ alkyl; and,
R⁴, R⁵, R⁶, R⁷ and R⁸ are independently selected from hydrogen, halogen, C₁-C₄ alkyl and - NHC(O)NR¹R².

A particular reference to the use of N,N-diethylurea, N,N-dipropylurea, N,N-ethyl-methylurea, N,N-dimethylurea, 1,1'-(4-methyl-m-phenylene)-bis-(3,3-dimethylurea) or 1,1'-(2-methyl-m-phenylene)-bis-(3,3-dimethylurea) may be made.

Further, exemplary commercially available urea derivatives having utility in the present disclosure include: Omicure U-24, Omicure U-35, Omicure U-410, Omicure U-52, Omicure U-415 and Omicure U-405, available from CVC Corporation; Amicure UR, Amicure UR7/10, Amicure UR200, Amicure UR300, Amicure UR500, Amicure UR2T, Amicure UR41 and Amicure UR-D, available from The Air Product Corporation; and, Dyhard UR200, Dyhard UR300, Dyhard UR500, Dyhard UR700 and Ecure 30, available from Alzchem Corporation.

The following examples are illustrative of the present invention and are not intended to limit the scope of the invention in any way.

### EXAMPLES

The following materials were employed in the Example:

| | |
|---|---|
| D.E.R 331: | Liquid epoxy resin derived from Bisphenol-A, available from Olin Epoxy. |
| Premix 188182 PM-182: | Premix of Epoxy (DER331), fumed silica and barbituric acid, available from Henkel Corporation. |
| Silquest A-187: | Silane coupling agent, available from Momentive Performance Materials. |
| Cyphos IL 169: | Trihexyl(tetradecyl)phosphonium bis(trifluoromethylsulfonyl)imide, available from Solvay. |
| Aerosil R202: | Fumed silica, surface treated with polydiemethylsiloxane, available from Evonik Industries. |
| Luzenac 2: | Talc based anti-blocking agent, available from Imerys. |
| Omyacarb 4HD: | Particulate calcium carbonate, available from Omya. |
| GPX801: | Carbon black, available from Applied Nanostructured Solutions, LLC. |
| TMPMP: | Trimethylpropane tris(3-mercaptopropionate) available from Bruno Bock. |
| Ajicure PN-H: | Latent Curing Agent, available from Ajinmoto Fine-Techno Co. Ltd. |
| Teroson EP 5065: | Two-part (2K) epoxy adhesive composition, available from Henkel Corporation. |
| E-coated Steel: | Specimens having the dimensions 100 mm × 25 mm × 1.8mm, available from Rocholl KTL Stahlprüfkörper. |
| Bonderite M-NT 1455 W: | Wipes comprising a chromium-free, dry-in-place metal pre-treatment agent, available from Henkel. |

The remaining compounds of the Examples may be obtained from Sigma Aldrich.

### Preparation

First and second components of a two-part (2K) composition were independently prepared in accordance with Table 1 herein below:

**Table 1**

| Ingredient | Wt.% (based on weight of composition) |
|---|---|
| 1st Component | |
| D.E.R. 331 | 24.11 |
| Premix 188182 PM-182 | 0.25 |
| Silquest A-187 | 1.00 |
| Cyphos IL 169 | 3.00 |
| Aerosil R202 | 0.50 |
| Luzenac 2 | 2.38 |
| Omyacarb 4HD | 18.71 |
| GPX801 | 0.05 |

| 2^{nd} Component | |
|---|---|
| TMPMP | 18.57 |
| Ajincure PN-H | 0.88 |
| Aerosil R202 | 0.58 |
| Omyacarb 4HD | 25.07 |
| Luzenac 2 | 4.90 |

The individual components were loaded into separate compartments of a 50g cartridge and sealed at both ends. The cartridge was then loaded into a cartridge-gun and a mixing tip was installed on the front end. By application of constant pressure on the trigger, the two components were pushed into the mixing tip to ensure sufficient mixing before application to the stated substrate.

The following procedures and tests were used to evaluate the tabulated composition:
Lap Shear Strength Testing: With reference to Figure 3, the following materials were employed as planar plates (5,6): aluminium, Al3003 (*available from Rocholl Aluminium Legierung*) of which the specimens have the dimensions of 100 mm × 25 mm × 2.0 mm; aluminium, Al5754 (*available from Rocholl Aluminium Legierung*) of which the specimens have the dimensions of 100 mm × 25 mm × 2.0 mm; stainless steel V2A (*available from Rocholl KTL Stahlprüfkörper*) of which the specimens have the dimensions 100 mm × 25 mm × 1.8mm; and, spring steel (*available from Rocholl KTL Stahlprüfkörper*) of which the specimens have the dimensions 12.50 mm × 25 mm × 1.0mm.

For each planar plate type, half of the provided specimens were first rubbed with a piece of paper soaked with isopropanol and then permitted to dry; the designated half of the Al5005 substrate specimens were then subjected to an additional wiping step using Bonderite M-NT 1455 W wipes. The specimens were then bar-coated with the exemplified two-component (2K) compositions (Table 1) to an approximate wet thickness of 200 microns. Further substrate specimens - which had not been coated and cleaned as described above - were mounted and faced with the coated specimens to interpose the exemplified adhesives therebetween to form a substructure (S). Each applied two-component (2K) adhesive composition was cured in the overlapping region at a temperature of 60°C for 120 minutes.

After said curing a bonded structure in accordance with Figure 1 appended hereto was prepared by having two e-coated steel plates as the first (1) and second (2) substrates. A layer (*1 mm thickness*) of TEROSON EP5065 fixative was applied on the surface of both first and second e-coated steel plates. The above prepared substructure (S) was disposed between these layers (3, 4) of fixative. The so-formed bonded structure was wiped to remove excess fixative and then clamped. The bonded structures were then treated to cure the constituent fixative in accordance with the technical data sheet thereof; the structures were then stored at room temperature for 24 hours prior to initial tensile testing. The bonded structure provided an area of overlap of the first (1) and second (2) substrates of 250 mm².

Tensile lap shear (TLS) test were performed at room temperature based upon ASTM D3163-01 *Standard Test Method for Determining Strength of Adhesively Bonded Rigid Plastic Lap-Shear Joints in Shear by Tension Loading.*

For each bonded structure, tensile lap shear strength was investigated after said 24 hour storage period both prior and subsequent to the application of a constant potential of 60V across the adhesive layer (7) for a maximum duration of 2 minutes. The results are documented in Table 2 herein below.

The results of the tests are documented in Table 2 below. The tabulated values represent the mean lap shear strength based on measurements for at least 3 bonded structures provided for each combination of substrate, plate, adhesive and fixative.

**Table 2**

| Substrates (1,2) | Fixative (3,4) | First Planar plate (5) | Second Planar plate (6) | Initial Bond Strength (MPa) | Bond Strength after 60 V, 20 minutes (MPa) | Observation |
|---|---|---|---|---|---|---|
| E-coated steel | TEROSON EP5065 | Stainless Steel V2A | Stainless Steel V2A | | 0.0 | Debonding at cathode after 5 seconds of applied potential |
| E-coated steel | TEROSON EP5065 | Spring Steel | Spring Steel | | 0.0 | Debonding at cathode after 5 seconds of applied potential |
| E-coated steel | TEROSON EP5065 | Al3003 | Al3003 | | 0.0 | Debonding at anode after 90 seconds of applied potential |
| E-coated steel | TEROSON EP5065 | Al5754 | Al5754 | | 0.0 | Debonding at anode after 45 seconds of applied potential |

For all tested structures, the layer of debondable adhesive (7) provided effective electrochemical disbonding under the applied potential (60V, ≤ 2 minutes).

In view of the foregoing description and example, it will be apparent to those skilled in the art that equivalent modifications thereof can be made without departing from the scope of the claims.

## Claims

1. A bonded structure comprising:
a first substrate;
a second substrate; and,
a substructure, said substructure comprising:
a first planar plate having an outer surface and being provided with an electrically conductive inner surface;
a second planar plate having an outer surface and being provided with an electrically conductive inner surface; and,
a layer of electrochemically debondable adhesive interposed between said electrically conductive inner surfaces of the first and second planar plates, said adhesive having electrolyte functionality and comprising a non-polymerizable electrolyte and a cured resinous matrix (M^{R});
wherein the bonded structure further comprises:
a layer of a first fixative interposed between the outer surface of the first planar plate of the substructure and the first substrate; and,
a layer of a second fixative interposed between the outer surface of the second planar plate of the substructure and the second substrate.

2. The bonded structure according to claim 1, where said first and second planar plates each independently have a thickness of from 0.5 to 2.5 mm, preferably from 1.0 to 2.5 mm, more preferably from 1.5 to 2.5 mm.

3. The bonded structure according to claim 1 or claim 2, wherein at least one planar plate consists of a material which possesses bulk electrical conductivity.

4. The bonded structure according to claim 3, wherein said material which possesses bulk electrical conductivity is selected from: metallic materials; semiconductor materials; or, resinous materials which are rendered conductive by virtue of electrically conductive elements disposed therein.

5. The bonded structure according to any one of claims 1 to 4, wherein at least one planar plate comprises: a bulk material which does not possess electrical conductivity; and, an electrically conductive material disposed on that bulk material to provide said electrically conductive inner surface.

6. The bonded structure according to any one of claims 1 to 5, wherein said layer of electrochemically debondable adhesive has a thickness of from 10 to 1000 µm, preferably from 10 to 500 µm, more preferably from 30 to 300 µm.

7. The bonded structure according to any one of claims 1 to 6, wherein said first planar plate is an integrant of a frame, which frame preferably supports at least one of said first or second substrates.

8. The bonded structure according to any one of claims 1 to 7, wherein said electrolyte comprises at least one non-polymerizable salt chosen from: ammonium salts; pyridinium salts; pyrrolidinium salts; phosphonium salts; imidazolium salts; oxazolium salts; guanidinium salts; sulfonium salts; thiazolium salts; and, mixtures thereof.

9. The bonded structure according to any one of claims 1 to 8, wherein said electrolyte comprises at least one non-polymerizable salt chosen from: trihexyl(tetradecyl)phosphonium bis(trifluoromethylsulfonyl)imide, tributylmethylphosphonium bis(fluorosulfonyl) imide, tributylmethylphosphonium methyl sulfate, tributylmethylammonium bis(fluorosulfonyl)imide, N-propyl-N-methylpyrrolidinium bis(fluorosulfonyl) imide, 1-ethyl-3-methyl-1H-imidazol-3-um methyl sulfate, 1-ethyl-3-methyl-1H-imidazol-3-um methanesulfonate, 1-ethyl-3-methylimidazolium trifluoromethanesulfonate, 1-ethyl-3-methylimidazolium bis(trifluoromethylsulfonyl)imide, 1-butyl-3-methylimidazolium methyl sulfate, 1-butyl-3-methylimidazolium methanesulfonate, 1-butyl-3-methylimidazolium-fluorosulfonate, 1-butyl-3-methylimidazolium trifluoromethanesulfonate, 1-butyl-3-methylimidazolium bis(trifluoromethylsulfonyl)imide, 1-butyl-3-methylimidazolium bis(fluorosulfonyl)imide, 1-dodecyl-3-methylimidazolium bis(fluorosulfonyl)imide and mixtures thereof.

10. The bonded structure according to any one of claims 1 to 9, wherein said layer of electrochemically debondable adhesive is obtained from a curable composition which comprises: said non-polymerizable electrolyte; a curable resin (C^{R}); and, optionally additive and adjunct materials.

11. The bonded structure according to claim 10, wherein said curable composition is a two-component (2K) composition comprising:
a first component comprising:
a) said non-polymerizable electrolyte; and,
b) at least one epoxide compound; and,
a second component comprising:
c) at least one compound which provides at least one epoxide-reactive group; and,
d) an accelerator,
wherein the two component (2K) composition further comprises:
e) a rheology control agent comprising electrically non-conductive fillers, electrically conductive fillers or mixtures thereof,
further wherein the composition is **characterized by** a molar ratio of epoxide-reactive groups to epoxide groups from 0.6:1 to 1.2: 1.

12. The bonded structure according to claim 11, wherein said two-component (2K) composition comprises, based on the weight of the composition:
from 0.5 to 15 wt.%, preferably 0.5 to 10 wt.% of a) said non-polymerizable electrolyte;
from 20 to 70 wt.%, preferably 20 to 60 wt.% of b) said at least one epoxide compound;
from 0.1 to 25 wt.%, preferably from 1 to 25 wt.%, of c) said at least one compound which provides at least one epoxide-reactive group;
from 0 to 15 wt.%, preferably from 0.1 to 10 wt.% of d) said accelerator; and,
from 10 to 60 wt.%, preferably from 15 to 60 wt.% of e) said rheology control agent,
wherein the two-component (2K) composition is **characterized by** a molar ratio of epoxide-reactive groups to epoxide groups from 0.6:1 to 1.2: 1, preferably from 0.9: 1 to 1.1: 1.

13. A method of separating the bonded structure as defined in any one of claims 1 to 12, said method comprising the steps of:
i) applying a voltage across the electrically conductive inner surfaces of the first and second planar plates of the substructure to form an anodic interface and a cathodic interface; and,
ii) debonding said surfaces.

14. The method according to claim, wherein the voltage applied in step i) is: from 0.5 to 200 V; and, applied for a duration of from 1 second to 60 minutes.

15. Use of the bonded structure according to any one of claims 1 to 12 in the framing of electronic components.
